# EUROPEAN PATENT APPLICATION

(11) **EP 4 742 717 A1**
(43) Date of publication of application: **13.05.2026**
(21) Application number: 24881718.1
(22) Date of filing: 25.10.2024
(51) Int. Cl.: H04W 8/24

(54) **CAPABILITY SYNCHRONIZATION METHOD AND SYSTEM, AND RELATED APPARATUS**

(30) Priority: 28.10.2023 CN 202311427500
(71) Applicant: Huawei Technologies Co., Ltd., Shenzhen, Guangdong 518129 (CN)
(72) Inventor: ZHANG, Yunji, Shenzhen, Guangdong 518129 (CN); DOU, Fenghui, Shenzhen, Guangdong 518129 (CN)
(74) Representative: Thun, Clemens
(86) International application number: PCT/CN2024/127214
(87) International publication number: WO 2025/087357

(57) **Abstract**

This application discloses a capability synchronization method, a system, and a related apparatus. A UE includes an NTN communication module and a mobile communication module. After the mobile communication module registers with a TN-CN, the NTN communication module performs a registration procedure of an NTN-CN via the mobile communication module, a TN-RAN, and the TN-CN. The NTN-CN obtains NTN air interface capability information of the UE from the NTN communication module via the TN-CN, the TN-RAN, and the mobile communication module. In this way, because the NTN-CN obtains the NTN air interface capability information of the UE in a TN network, the NTN-CN does not need to obtain the NTN air interface capability information of the UE again in an NTN. This reduces signaling overheads for transmitting the NTN air interface capability information of the UE between the UE and the non-terrestrial network core network, reduces time required by the UE to transmit the NTN air interface capability information of the UE in the NTN, and reduces power consumption of the UE.

## Description

This application claims priority to Chinese Patent Application No. 202311427500.9, filed with the China National Intellectual Property Administration on October 28, 2023 and entitled "CAPABILITY SYNCHRONIZATION METHOD, SYSTEM, AND RELATED APPARATUS", which is incorporated herein by reference in its entirety.

### TECHNICAL FIELD

This application relates to the communication field, and in particular, to a capability synchronization method, a system, and a related apparatus.

### BACKGROUND

Currently, some user equipments (user equipments, UEs) support a non-terrestrial network (non-terrestrial network, NTN) communication function. With development of communication technologies, more UEs will support the NTN communication function in the future. The UE having the NTN communication function can perform communication via a satellite in an area that is not covered or cannot be covered with mobile communication or in which a communication system is damaged, for example, an ocean, a desert, a grassland, a high altitude, or a no man's land.

In a process in which the UE communicates with a non-terrestrial network device, the non-terrestrial network device needs to provide a corresponding communication resource for the UE based on NTN air interface capability information of the UE. Because the UE has a large amount of NTN air interface capability information, when sending the NTN air interface capability information of the UE to the non-terrestrial network device, the UE needs to occupy more air interface resources. Consequently, transmission time is long, and power consumption of the UE is high.

### SUMMARY

This application provides a capability synchronization method, a system, and a related apparatus. A UE includes an NTN communication module and a mobile communication module. The mobile communication module obtains registration information of the NTN communication module. After the mobile communication module registers with a terrestrial network core network, the NTN communication module performs a registration procedure of a non-terrestrial network core network via the mobile communication module and the terrestrial network core network. The non-terrestrial network core network obtains NTN air interface capability information of the UE from the NTN communication module of the UE via the terrestrial network core network. After finding an NTN-RAN, the NTN communication module of the UE accesses the non-terrestrial network core network. The non-terrestrial network core network obtains the NTN air interface capability information of the UE in a terrestrial network. This reduces an air interface resource of a non-terrestrial network, and further reduces time for transmitting the NTN air interface capability information of the UE between the UE and the non-terrestrial network core network in the non-terrestrial network.

According to a first aspect, this application provides a capability synchronization method, applied to a communication system. The communication system includes a user equipment UE, a non-terrestrial network core network NTN-CN device, a non-terrestrial network radio access network NTN-RAN device, and a terrestrial network device. The method includes: The UE receives a first non-terrestrial network air interface capability request sent by the terrestrial network device, and sends a first non-terrestrial network air interface capability message to the terrestrial network device, where the first non-terrestrial network air interface capability message includes NTN air interface capability information of the UE;
the terrestrial network device sends a second non-terrestrial network air interface capability message to the NTN-CN device, where the second non-terrestrial network air interface capability message includes the NTN air interface capability information of the UE;
the UE finds an NTN, and sends a first mobility registration request message to the NTN-CN device via the NTN-RAN device, where the first mobility registration request message is used by the UE to register with the NTN-CN device; and
the NTN-CN device sends the NTN air interface capability information of the UE to the NTN-RAN device after receiving the first mobility registration request message. In this way, the UE can send the NTN air interface capability information to the terrestrial network device in a TN, and the NTN-CN device may not need to obtain the NTN air interface capability information of the UE in the NTN, thereby reducing an air interface resource of the NTN.

In some examples, that the UE finds the NTN indicates that the UE receives a signal sent by the NTN-RAN.

In a possible implementation, before the UE receives the first non-terrestrial network air interface capability request, the method further includes: After the UE successfully registers with the NTN-CN device via the terrestrial network device, the NTN-CN device sends a second non-terrestrial network air interface capability request to the terrestrial network device, where the second non-terrestrial network air interface capability request is used by the NTN-CN device to obtain the NTN air interface capability information of the UE; and the terrestrial network device sends the first non-terrestrial network air interface capability request to the UE after receiving the second non-terrestrial network air interface capability request. In this way, after the UE successfully registers with the NTN-CN device via the terrestrial network device, the NTN-CN device can obtain the NTN air interface capability information of the UE via the terrestrial network device.

In a possible implementation, the terrestrial network device includes a terrestrial network radio access network TN-RAN device and a terrestrial network core network TN-CN device. That the terrestrial network device sends the first non-terrestrial network air interface capability request to the UE after receiving the second non-terrestrial network air interface capability request specifically includes: The TN-CN device receives the second non-terrestrial network air interface capability request, and sends the first non-terrestrial network air interface capability request to the TN-RAN device; and the TN-RAN device receives the first non-terrestrial network air interface capability request, and sends the first non-terrestrial network air interface capability request to the UE. In this way, after receiving the second non-terrestrial network air interface capability request sent by the NTN-CN device, the TN-CN device can send the first non-terrestrial network air interface capability request to the UE in response to the second non-terrestrial network air interface capability request.

In some examples, the second non-terrestrial network air interface capability request is an N1 NTN container (UE Capability Enquiry) or an N1 NTN container (UE Capability Info Request). The first non-terrestrial network air interface capability request is a non-access stratum NAS message or a radio resource control RRC message including the second non-terrestrial network air interface capability request.

In a possible implementation, the terrestrial network device includes a TN-CN device and a TN-RAN device. That the terrestrial network device sends the first non-terrestrial network air interface capability request to the UE after receiving the second non-terrestrial network air interface capability request specifically includes: The TN-CN device receives the second non-terrestrial network air interface capability request, and sends the second non-terrestrial network air interface capability request to the TN-RAN device; and the TN-RAN device receives the second non-terrestrial network air interface capability request, and sends the first non-terrestrial network air interface capability request to the UE. In this way, after receiving, via the TN-CN device, the second non-terrestrial network air interface capability request sent by the NTN-CN device, the TN-RAN device can send the first non-terrestrial network air interface capability request to the UE in response to the second non-terrestrial network air interface capability request.

In a possible implementation, the terrestrial network device includes a TN-RAN device. Before the UE receives the first non-terrestrial network air interface capability request, the method further includes: After the UE successfully registers with the NTN-CN device via the TN-RAN device, the NTN-CN device sends the first non-terrestrial network air interface capability request to the TN-RAN device; and the TN-RAN device sends the first non-terrestrial network air interface capability request to the UE after receiving the first non-terrestrial network air interface capability request. In this way, the UE sends signaling to the NTN-CN device via the TN-RAN device, to reduce an air interface resource of the NTN-RAN device.

In a possible implementation, the terrestrial network device includes a TN-RAN device. Before the UE receives the first non-terrestrial network air interface capability request, the method further includes: After the UE successfully registers with the NTN-CN device via the TN-RAN device, the NTN-CN device sends a second non-terrestrial network air interface capability request to the TN-RAN device, where the second non-terrestrial network air interface capability request is used by the NTN-CN device to obtain the NTN air interface capability information of the UE; and the TN-RAN device sends the first non-terrestrial network air interface capability request to the UE after receiving the second non-terrestrial network air interface capability request. In this way, the UE sends signaling to the NTN-CN device via the TN-RAN device, to reduce an air interface resource of the NTN-RAN device.

In a possible implementation, that the terrestrial network device sends the second non-terrestrial network air interface capability message to the NTN-CN device specifically includes: The TN-RAN device sends the second non-terrestrial network air interface capability message to the NTN-CN device. In this way, the NTN-CN device obtains the NTN air interface capability information of the UE in the TN.

In a possible implementation, the UE includes a mobile communication module and an NTN communication module. The UE receives the first non-terrestrial network air interface capability request via the mobile communication module. The mobile communication module of the UE generates the first non-terrestrial network air interface capability message based on the NTN air interface capability information provided by the NTN communication module, and sends the first non-terrestrial network air interface capability message to the terrestrial network device.

In a possible implementation, that the terrestrial network device sends the second non-terrestrial network air interface capability message to the NTN-CN device specifically includes: The terrestrial network device sends the second non-terrestrial network air interface capability message to the NTN-CN device in response to the first non-terrestrial network air interface capability message. In this way, after receiving the NTN air interface capability information, the terrestrial network directly forwards the information to the NTN-CN device.

In a possible implementation, the first non-terrestrial network air interface capability message is a user equipment capability information UE Capability Information message, and the second non-terrestrial network air interface capability message is a user equipment capability information indication UE Capability Infor Indication message.

In a possible implementation, the UE includes a mobile communication module and an NTN communication module. That the UE receives the first non-terrestrial network air interface capability request sent by the terrestrial network device specifically includes: The mobile communication module of the UE receives the first non-terrestrial network air interface capability request, and obtains the NTN air interface capability information of the UE from the NTN communication module; and the mobile communication module of the UE generates the first non-terrestrial network air interface capability message based on the NTN air interface capability information. Sending the first non-terrestrial network air interface capability message to the terrestrial network device specifically includes: The mobile communication module of the UE sends the first non-terrestrial network air interface capability message to the terrestrial network device. In this way, the UE can send the NTN air interface capability information to the terrestrial network device via the mobile communication module.

In a possible implementation, that the terrestrial network device sends the first non-terrestrial network air interface capability request to the UE specifically includes: After an NTN air interface capability change of the UE, the UE sends a first capability change message to the NTN-CN device via the terrestrial network device, where the first capability change message indicates that an NTN air interface capability of the UE changes; and the NTN-CN device sends the first non-terrestrial network air interface capability request to the UE via the terrestrial network device in response to the first capability change message. In this way, the UE can trigger the TN-CN device to obtain the NTN air interface capability information.

In a possible implementation, the terrestrial network device includes a TN-CN device. Before the UE receives the first non-terrestrial network air interface capability request, the method further includes: The terrestrial network device sends the first non-terrestrial network air interface capability request to the UE after the UE successfully registers with the TN-CN device via the terrestrial network device. In this way, the TN-CN device can obtain and store the NTN air interface capability information of the UE, and when needing to obtain the NTN air interface capability information of the UE, the NTN-CN device can directly obtain the NTN air interface capability information from the TN-CN device.

In a possible implementation, that the terrestrial network device sends the first non-terrestrial network air interface capability request to the UE specifically includes: The UE sends a first capability change message to the TN-CN device after the UE successfully registers with the TN-CN device via the terrestrial network device, where the first capability change message indicates that an NTN air interface capability of the UE changes; the TN-CN device sends a second non-terrestrial network air interface capability request to a TN-RAN device in response to the first capability change message; and the TN-RAN device sends the first non-terrestrial network air interface capability request to the UE in response to the second non-terrestrial network air interface capability request; or the TN-CN device sends the first non-terrestrial network air interface capability request to the UE via the TN-RAN device in response to the first capability change message. In this way, the UE can trigger the TN-CN device to obtain the NTN air interface capability information.

In a possible implementation, the first capability change message is a second mobility registration request message. The second mobility registration request message includes a parameter indicating that the NTN air interface capability of the UE changes; or the first capability change message is a user equipment capability release command message.

In a possible implementation, the method further includes: The NTN-CN device sends a first capability synchronization message to the TN-CN device after receiving the first mobility registration request message, where the first capability synchronization message is used to obtain the NTN air interface capability information of the UE from the TN-CN device. That the terrestrial network device sends the second non-terrestrial network air interface capability message to the NTN-CN device specifically includes: The TN-CN device sends the second non-terrestrial network air interface capability message to the NTN-CN device in response to the first capability synchronization message. In this way, the NTN-CN device sends the NTN air interface capability information to the NTN-RAN device.

In a possible implementation, sending the NTN air interface capability information of the UE to the NTN-RAN device specifically includes: The NTN-CN device sends an initial context setup request message to the NTN-RAN device, where the initial context setup request message includes the NTN air interface capability information of the UE.

In a possible implementation, the first non-terrestrial network air interface capability request is a user equipment capability enquiry UE capability enquiry (NTN) message. The second non-terrestrial network air interface capability request is a non-terrestrial network air interface capability information request NTN capability info request.

In a possible implementation, the NTN air interface capability information includes a carrier supported by the UE, an antenna polarization direction of the UE, maximum transmit power of the UE, and a duplex mode of the UE. In this way, the NTN-CN device and the NTN-RAN device can configure an air interface resource and a communication mode for the UE based on the NTN air interface capability information.

In a possible implementation, if the NTN-CN device does not receive the NTN air interface capability information of the UE sent by the TN-CN device, the NTN-CN device sends a third non-terrestrial network air interface capability request to the UE via the NTN-RAN device.

According to a second aspect, this application provides a capability synchronization method, applied to a user equipment UE. The method includes: The UE receives a first non-terrestrial network air interface capability request sent by a terrestrial network device, where the first non-terrestrial network air interface capability request is used to obtain NTN air interface capability information of the UE; the UE sends a first non-terrestrial network air interface capability message to the terrestrial network device after receiving the first non-terrestrial network air interface capability request, where the first non-terrestrial network air interface capability message includes the NTN air interface capability information of the UE; and the UE sends a mobility registration request message to a non-terrestrial network core network NTN-CN device after finding a non-terrestrial network NTN, where the mobility registration request message notifies the NTN-CN device to send the NTN air interface capability information of the UE to an NTN-RAN device. In this way, the UE receives, in a TN, the request used to obtain the NTN air interface capability information, and the UE can send the NTN air interface capability information to the core network device in the TN.

In a possible implementation, before the UE receives the first non-terrestrial network air interface capability request sent by the terrestrial network device, the method further includes: The UE registers with the NTN-CN device via the terrestrial network device. In this way, the UE registers with the NTN-CN device via the TN device, and the NTN-CN device can send the first non-terrestrial network air interface capability request to the UE, to obtain the NTN air interface capability information of the UE.

In a possible implementation, before the UE receives the first non-terrestrial network air interface capability request sent by the terrestrial network device, the method further includes: The UE registers with a TN-CN device. In this way, after the UE registers with the TN-CN device via the TN device, the TN-CN device can send the first non-terrestrial network air interface capability request to the UE, to obtain the NTN air interface capability information of the UE.

In a possible implementation, before the UE receives the first non-terrestrial network air interface capability request sent by the terrestrial network device, the method further includes: The UE sends a first capability change message to the TN-CN device, where the first capability change message indicates that an NTN air interface capability of the UE changes.

In this way, after receiving the first capability change message, the TN-CN device can send the first non-terrestrial network air interface capability request to the UE in response to the first capability change message, to obtain changed NTN air interface capability information of the UE. Alternatively, after receiving the first capability change message, the TN-CN device can send the first capability change message to the NTN-CN device. The NTN-CN device can send a second non-terrestrial network air interface capability request to the TN-CN device in response to the first capability change message. The TN-CN device can send the first non-terrestrial network air interface capability request to the UE in response to the second non-terrestrial network air interface capability request.

According to a third aspect, this application provides a capability synchronization method, applied to a non-terrestrial network NTN-CN device. The method includes: The NTN-CN device sends a first non-terrestrial network air interface capability request to a user equipment UE via a terrestrial network device, where the first non-terrestrial network air interface capability request is used to obtain NTN air interface capability information of the UE; the NTN-CN device receives, via the terrestrial network device, a first non-terrestrial network air interface capability message sent by the UE, where the first non-terrestrial network air interface capability message includes the NTN air interface capability information of the UE; and the NTN-CN device sends the NTN air interface capability information of the UE to a first non-terrestrial network radio access network NTN-RAN device after receiving a mobility registration request message sent by the UE, where the first mobility registration request message is used by the UE to register with the NTN-CN device. In this way, the NTN-CN device can obtain the NTN air interface capability information of the UE via the terrestrial network device, thereby reducing an air interface resource of an NTN.

In a possible implementation, before the NTN-CN device sends the first non-terrestrial network air interface capability request to the UE via the terrestrial network device, the method further includes: The NTN-CN device accepts an initial registration request of the UE via the terrestrial network device. In this way, the NTN-CN device accepts the initial registration request of the UE via the terrestrial network device, and the NTN-CN device can send the first non-terrestrial network air interface capability request to the UE via the terrestrial network device, to obtain the NTN air interface capability information of the UE.

In a possible implementation, that the NTN-CN device sends the first non-terrestrial network air interface capability request to the UE via the terrestrial network device specifically includes: The NTN-CN device receives, via the terrestrial network device, a first capability change message sent by the UE, where the first capability change message indicates that an NTN air interface capability of the UE changes; and the NTN-CN device sends the first non-terrestrial network air interface capability request to the UE via the terrestrial network device in response to the first capability change message. In this way, the NTN-CN device receives, via the terrestrial network device, the first capability change message sent by the UE, determines that the NTN air interface capability of the UE changes, and sends the first non-terrestrial network air interface capability request to the UE via the terrestrial network device, to obtain changed NTN air interface capability information of the UE.

According to a fourth aspect, this application provides a capability synchronization method, applied to a non-terrestrial network NTN-CN device. The method includes: The NTN-CN device sends a first capability synchronization message to a terrestrial network core network TN-CN device after receiving a first mobility registration request message sent by a UE, where the first capability synchronization message is used to obtain NTN air interface capability information of the UE from the TN-CN device; the NTN-CN device receives a first non-terrestrial network air interface capability message sent by the TN-CN device, where the first non-terrestrial network air interface capability message includes the NTN air interface capability information of the UE; and the NTN-CN device sends the NTN air interface capability information of the UE to a non-terrestrial network radio access network NTN-RAN device. In this way, the NTN-CN device can obtain the NTN air interface capability information of the UE via a terrestrial network device, thereby reducing an air interface resource of an NTN.

According to a fifth aspect, this application provides a capability synchronization method, applied to a terrestrial network core network TN-CN device. The method includes: The TN-CN device sends a first non-terrestrial network air interface capability request to a user equipment UE, where the first non-terrestrial network air interface capability request is used to obtain NTN air interface capability information of the UE; the TN-CN device receives a first non-terrestrial network air interface capability message sent by the UE, where the first non-terrestrial network air interface capability message includes the NTN air interface capability information of the UE; and the TN-CN device sends a second non-terrestrial network air interface capability message to a non-terrestrial network core network NTN-CN device, where the second non-terrestrial network air interface capability message includes the NTN air interface capability information of the UE. In this way, the TN-CN device can help the NTN-CN device obtain the NTN air interface capability information of the UE, thereby reducing an air interface resource of an NTN.

In a possible implementation, that the TN-CN device sends the first non-terrestrial network air interface capability request to the user equipment UE specifically includes: The TN-CN device receives a second non-terrestrial network air interface capability request sent by the NTN-CN device; and the TN-CN device sends the first non-terrestrial network air interface capability request to the UE in response to the second non-terrestrial network air interface capability request. In this way, after receiving the second non-terrestrial network air interface capability request for obtaining the NTN air interface capability information of the UE by the NTN-CN device, the TN-CN device sends the first non-terrestrial network air interface capability request to the UE, to obtain the NTN air interface capability information of the UE.

In a possible implementation, that the TN-CN device sends the first non-terrestrial network air interface capability request to the user equipment UE specifically includes: The TN-CN device sends the first non-terrestrial network air interface capability request to the UE after accepting an initial registration request of the UE. In this way, after receiving the initial registration request of the UE supporting an NTN communication function, the TN-CN device obtains the NTN air interface capability information of the UE, and synchronizes the information to the NTN-CN device.

In a possible implementation, that the TN-CN device sends the second non-terrestrial network air interface capability message to the non-terrestrial network core network NTN-CN device specifically includes: The TN-CN device receives a first capability synchronization message sent by the NTN-CN device; and the TN-CN device sends the second non-terrestrial network air interface capability message to the NTN-CN device in response to the first capability synchronization message. In this way, the TN-CN device stores the NTN air interface capability information of the UE, and when receiving the first capability synchronization message from the NTN-CN device, sends the NTN air interface capability information to the NTN-CN device.

In a possible implementation, before the TN-CN device sends the first non-terrestrial network air interface capability request to a user equipment UE, the method further includes: The TN-CN device receives a first capability change message sent by the UE, where the first capability change message indicates that an NTN air interface capability of the UE changes.

In some examples, after receiving the first capability change message, the TN-CN device sends the first non-terrestrial network air interface capability request to the UE in response to the first capability change message.

In some examples, after receiving the first capability change message, the TN-CN device sends the first capability change message to the NTN-CN device. The TN-CN device receives the second non-terrestrial network air interface capability request sent by the NTN-CN device. The TN-CN device sends the first non-terrestrial network air interface capability request to the UE in response to the second non-terrestrial network air interface capability request. In this way, the NTN-CN device can send the second non-terrestrial network air interface capability request to the TN-CN device in response to the first capability change message, to trigger the TN-CN device to obtain the NTN air interface capability information of the UE.

According to a sixth aspect, this application provides a capability synchronization method, applied to a terrestrial network radio access network TN-RAN device. In a possible implementation, the method includes: The TN-RAN device sends a first non-terrestrial network air interface capability request to a user equipment UE, where the first non-terrestrial network air interface capability request is used to obtain NTN air interface capability information of the UE; the TN-RAN device receives a first non-terrestrial network air interface capability message sent by the UE, where the first non-terrestrial network air interface capability message includes the NTN air interface capability information of the UE; and the TN-RAN device sends a second non-terrestrial network air interface capability message to a non-terrestrial network core network NTN-CN device or a terrestrial network core network TN-CN device, where the second non-terrestrial network air interface capability message includes the NTN air interface capability information of the UE. In this way, the TN-RAN device can help the NTN-CN device obtain the NTN air interface capability information of the UE, thereby reducing an air interface resource of an NTN.

According to a seventh aspect, this application provides an electronic device, including one or more processors and one or more memories, where the one or more memories are coupled to the one or more processors, the one or more memories are configured to store a computer executable program, and when the one or more processors execute the computer executable program, the electronic device is enabled to perform the method according to any one of the possible implementations of the second aspect to the sixth aspect.

According to an eighth aspect, this application provides a computer-readable storage medium, storing a computer program. When the computer program is run on a processor of an electronic device, the electronic device is enabled to perform the method according to any one of the possible implementations of the second aspect to the sixth aspect.

According to a ninth aspect, this application provides a chip, used in a user equipment and including a plurality of modules. The plurality of modules include a mobile communication module and an NTN communication module. The plurality of modules are configured to perform the method according to any one of the possible implementations of the second aspect.

### BRIEF DESCRIPTION OF DRAWINGS

FIG. 1 is a diagram of a communication system 10 according to an embodiment of this application;
FIG. 2A to FIG. 2D are a schematic flowchart of a registration call according to an embodiment of this application;
FIG. 3 is a schematic flowchart of a UE capability change according to an embodiment of this application;
FIG. 4A and FIG. 4B are a schematic flowchart of a capability synchronization method according to an embodiment of this application;
FIG. 5A and FIG. 5B are a schematic flowchart of another capability synchronization method according to an embodiment of this application;
FIG. 6A and FIG. 6B are a schematic flowchart of another capability synchronization method according to an embodiment of this application;
FIG. 7 is a schematic flowchart of another capability synchronization method according to an embodiment of this application; and
FIG. 8 is a diagram of a hardware structure of a UE 100 according to an embodiment of this application.

### DESCRIPTION OF EMBODIMENTS

With reference to the accompanying drawings, the following clearly describes in detail the technical solutions in embodiments of this application. In the descriptions of embodiments of this application, "/" indicates or unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

In the following descriptions, the terms "first" and "second" are merely intended for a purpose of description, and shall not be interpreted as an implication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A communication system provided in embodiments of this application is first described.

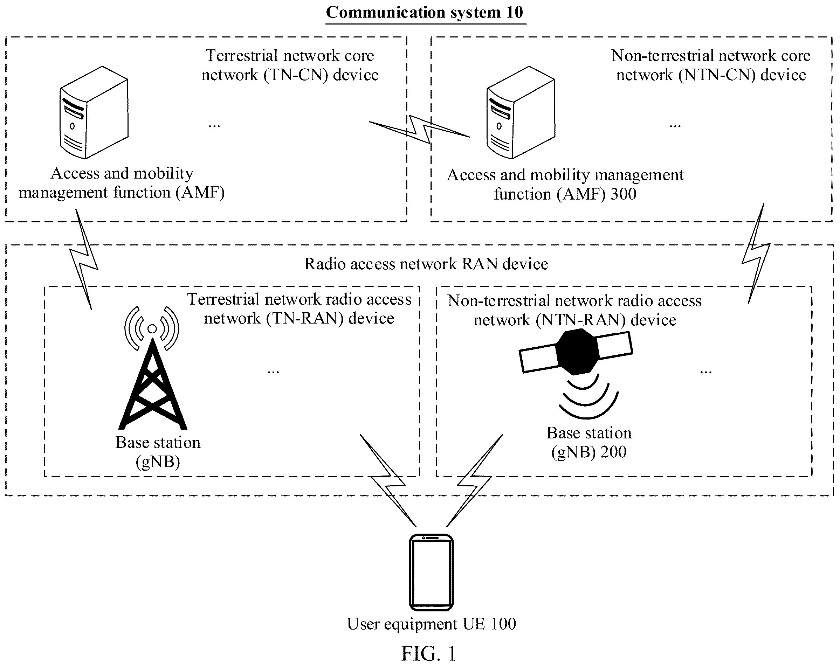

For example, as shown in FIG. 1, a communication system 10 may include but is not limited to a core network (core network, CN) device, a radio access network (radio access network, RAN) device, and a user equipment UE 100. The core network device may be configured to: verify a user equipment, and provide a mobile communication service (for example, call control or data transmission) for a UE that accesses the core network device. The core network device may be classified into a terrestrial network core network (terrestrial network core network, TN-CN) device and a non-terrestrial network core network (non-terrestrial network core network, NTN-CN) device. The NTN-CN device may include but is not limited to an access and mobility management function (access and mobility management function, AMF) 300. The AMF 300 may be used for NTN core network registration management, UE mobility management control, context security management, and the like.

The radio access network device may include one or more base stations (next generation NodeB, gNB). The radio access network device may be used by the UE to access the core network device. The radio access network device may be classified into a terrestrial network radio access network (terrestrial network radio access network, TN-RAN) device and a non-terrestrial network radio access network (non-terrestrial network radio access network, NTN-RAN) device. The UE 100 may access the TN-CN device via the TN-RAN device. The TN-RAN device may include a terrestrial base station shown in FIG. 1. The UE 100 may access the NTN-CN device via the NTN-RAN device. The NTN-RAN device may include a base station 200 shown in FIG. 1. It should be noted that the base station 200 may include a satellite and a terrestrial transceiver station. When the UE 100 sends data to the NTN-CN device, the UE 100 first sends the data to the satellite of the base station 200. After receiving the data sent by the UE 100, the satellite of the base station 200 may relay and forward the data sent by the UE 100 to the terrestrial transceiver station. The terrestrial transceiver station may transmit the data sent by the UE 100 to the NTN-CN device. Similarly, when the NTN-CN device sends data to the UE 100, the NTN-CN device may first send the data to the terrestrial transceiver station of the base station 200. The terrestrial transceiver station may relay and forward the data sent by the NTN-CN device to the satellite of the base station 200. The satellite of the base station 200 may deliver the data of the NTN-CN device to the UE 100.

The TN-RAN device and the TN-CN device may be collectively referred to as a terrestrial network device. The NTN-CN device and the NTN-RAN device may be collectively referred to as a non-terrestrial network device.

In this embodiment of this application, the UE 100 may send a radio signal to the base station 200. After receiving the radio signal sent by the UE 100, the base station 200 may forward the radio signal sent by the UE 100 to the terrestrial AMF 300. Similarly, the AMF 300 may send a radio signal to the base station 200. After receiving the radio signal sent by the AMF 300, the base station 200 may forward the radio signal to the UE 100. In this case, when the UE 100 is in an area that is not covered or cannot be covered with mobile communication or in which a communication system is damaged, for example, an ocean, a desert, a grassland, or a no man's land, the UE 100 cannot receive a signal of a terrestrial network, and may access a non-terrestrial network core network via a satellite base station, and perform positioning and communication via the non-terrestrial network core network.

A transmission protocol of the communication system 10 includes an access stratum (access stratum, AS) protocol and a non-access stratum (non-access stratum, NAS) protocol. In the communication system 10, the UE 100 and the AMF 300 may communicate with each other according to the NAS protocol, the UE 100 and the base station 200 may communicate with each other according to the AS protocol, and the AMF 300 and the base station 200 may also communicate with each other according to the AS protocol. An AS protocol layer may include a physical (physical, PHY) layer, a medium access control (medium access control, MAC) layer, a radio link control (radio link control, RLC) layer, a packet data convergence protocol (packet data convergence protocol, PDCP) layer, and a radio resource control (radio resource control, RRC) layer.

In the following descriptions, the NTN-CN device may be abbreviated as an NTN-CN, the TN-CN device may be abbreviated as a TN-CN, the NTN-RAN device may be abbreviated as an NTN-RAN, and the TN-RAN device may be abbreviated as a TN-RAN.

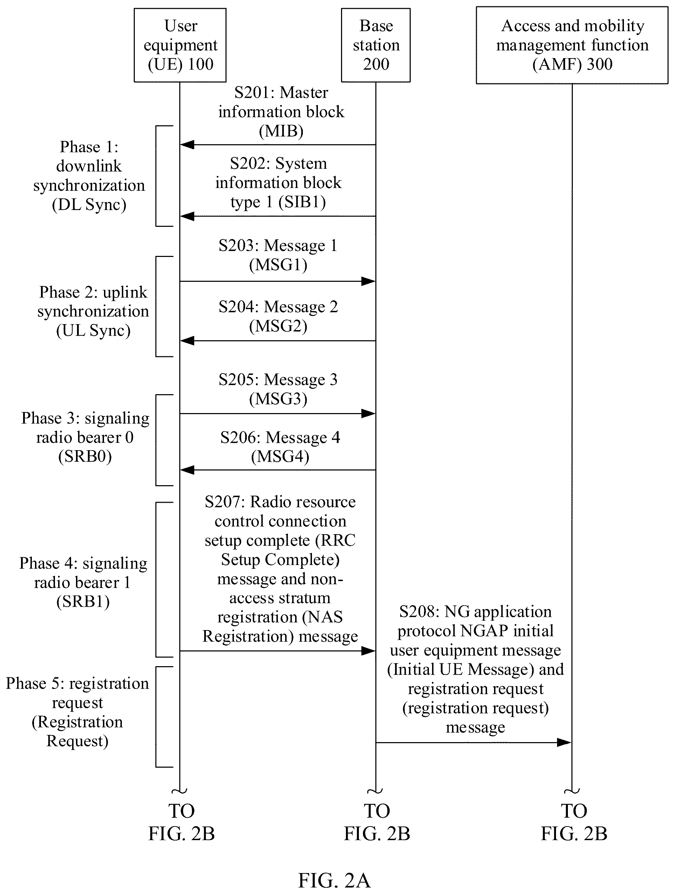

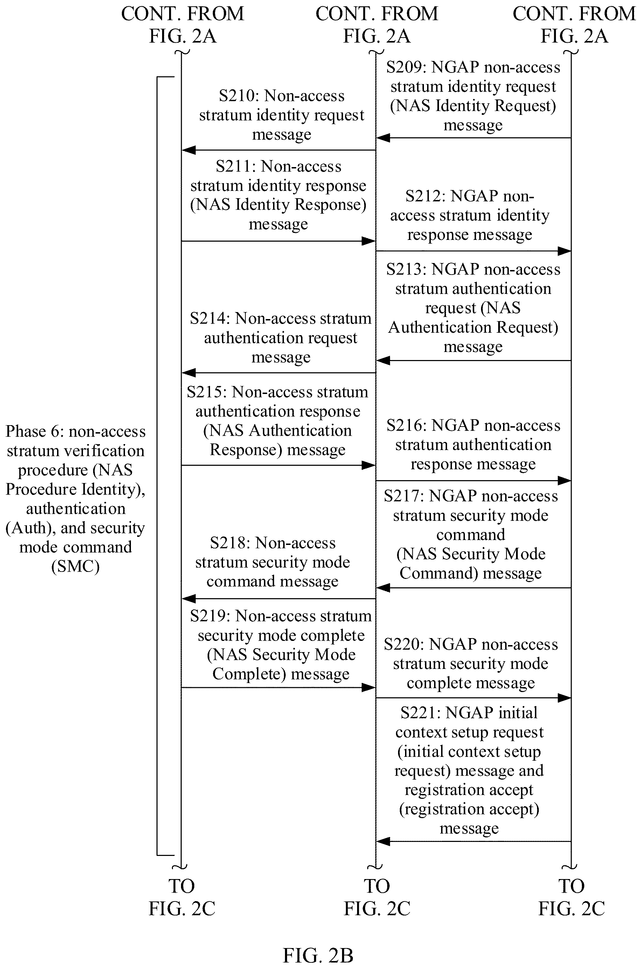

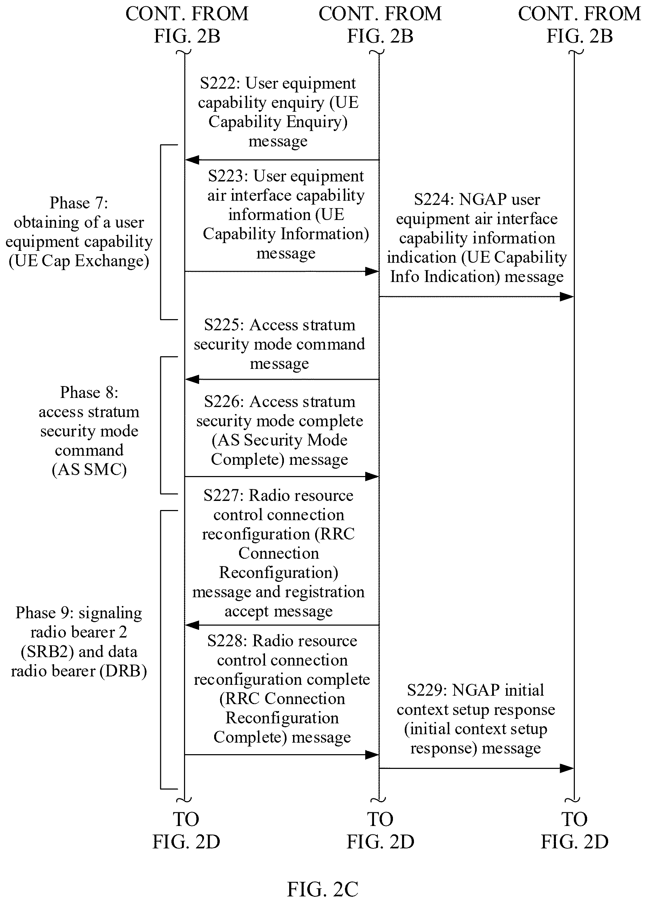

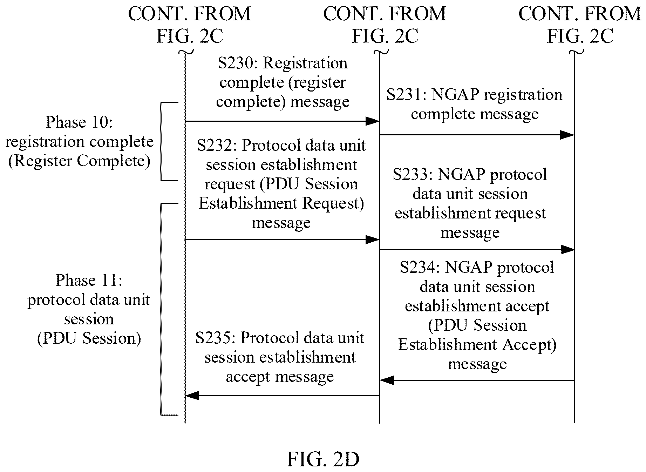

In a possible implementation, after finding the NTN-RAN, the UE 100 performs a procedure of registering with the NTN-CN. In the process in which the UE 100 registers with the NTN-CN, the NTN-CN may obtain NTN air interface capability information of the UE via the NTN-RAN. Specifically, for the process in which the UE 100 registers with the NTN-CN, refer to an embodiment shown in FIG. 2A to FIG. 2D. Content of Phase 7 in FIG. 2A to FIG. 2D describes in detail a process in which the NTN-CN obtains the NTN air interface capability information of the UE 100. For example, as shown in FIG. 2A to FIG. 2D, a registration call procedure of the UE 100 in an NTN includes the following steps.

### Phase 1: downlink synchronization (downlink synchronize, DL Sync)

S201: The UE 100 receives a master message block (master information block, MIB) sent by the base station 200.

The base station 200 may broadcast the MIB, and all UEs within a beam range of the base station 200 may receive the MIB sent by the base station 200. The MIB includes a demodulation parameter, a system bandwidth, a system frame number, and the like of a system information block type 1 (system information block type 1, SIB1). The UE 100 may adjust, based on the MIB, a receive frequency range of the UE 100 to a frequency range for receiving a downlink signal of the base station 200. The UE 100 may further adjust, based on the MIB, a time point for receiving a communication frame sent by the base station 200.

S202: The UE 100 receives the SIB1 sent by the base station 200.

The SIB1 may also be referred to as remaining minimum system information (remaining minimum system information, RMSI), and the base station 200 may broadcast a SIB message. The UE 100 may obtain, based on the demodulation parameter indicated by the MIB, content of the SIB1 broadcast by the base station 200. The SIB1 may include a receive time parameter of another SIB message, to indicate a time point at which the UE 100 receives another SIB.

In this way, after performing the steps in Phase 1, the UE 100 can implement downlink synchronization between the UE 100 and the base station 200, and the UE 100 can receive, in a frequency band indicated by the base station 200 and at time indicated by the base station 200, data sent by the base station 200.

### Phase 2: uplink synchronization (uplink synchronize, UL Sync)

S203: The UE 100 sends a message 1 (message 1, MSG1) to the base station 200.

The message 1 is a preamble in a 3rd generation partnership project (3rd generation partnership project, 3GPP) uplink synchronization process. The UE 100 may obtain, based on the SIB1, configuration information of a random access channel (random access channel, RACH), and select, based on the obtained configuration information, a preamble (preamble) corresponding to the configuration information. The UE 100 may implement uplink synchronization between the UE 100 and the base station 200 based on the preamble, and the UE 100 may send an uplink signal to the base station 200. The message 1 may be referred to as a random access channel preamble (RACH Preamble).

S204: The UE 100 receives a message 2 (message 2, MSG2) sent by the base station 200.

After receiving the MSG1 sent by the UE 100, the base station 200 may determine a transmission delay between the base station 200 and the UE 100 based on the MSG1. Then, the base station 200 may determine a value of a timing advance command (timing advance command, TAM) field based on the transmission delay between the base station 200 and the UE 100. The timing advance command field is a field in the MSG2, and indicates time at which the UE 100 sends uplink data. The base station 200 may send the MSG2 including the TAM field to the UE 100. After receiving the MSG2, the UE 100 may determine the time for sending the uplink data to the base station 200. The message 2 may be referred to as a random access channel response (RACH Response).

In this way, after performing the steps in Phase 2, the UE 100 can implement uplink synchronization between the UE 100 and the base station 200, and the UE 100 can send, in a frequency band indicated by the base station 200 and at the time indicated by the base station 200, the data to the base station 200.

### Phase 3: signaling radio bearer 0 (signaling radio bearer 0, SRB0)

S205: The UE 100 sends a message 3 (message 3, MSG3) to the base station 200.

After receiving the MSG2, the UE 100 may perform a step of setting up an RRC connection to the base station 200, and the UE 100 may transmit data at a NAS through the RRC connection. The UE 100 may send the MSG3 to the base station 200 on an uplink common control channel (uplink common control channel, UL-CCCH) via the SRB0 based on the time that is for sending the uplink data and that is indicated by the MSG2. The MSG3 is an RRC setup request (RRC Setup Request). The SRB0 may be used to carry the RRC message MSG3.

S206: The UE 100 receives a message 4 (message 4, MSG4) sent by the base station 200.

The base station 200 may receive the MSG3 from the UE 100 at the time indicated by the MSG2. After receiving the MSG3, the base station 200 may determine whether to allow setup of the RRC connection, and set content of the MSG4 based on a determining result. When the base station 200 does not allow setup of the RRC connection, the message 4 is a radio resource control reject (RRC Reject) message. When the base station 200 confirms to set up the RRC connection, the message 4 is a radio resource control setup (RRC Setup) message. The base station 200 may further include a complete configuration of the SRB1 in the RRC setup message, and the base station 200 may send the MSG4 via the SRB0. After receiving the RRC setup message, the UE 100 may set up the SRB1 based on the message.

In this way, the UE 100 can set up the RRC connection after performing the steps in Phase 3.

### Phase 4: signaling radio bearer 1 (signaling radio bearer 1, SRB1)

S207: The UE 100 sends a radio resource control connection setup complete (RRC Setup Complete) message and a non-access stratum registration (NAS Registration) message to the base station 200.

After receiving the MSG4, the UE 100 may configure the SRB1 based on the MSG4. After configuring the SRB1, the UE 100 may send the RRC setup complete message to the base station 200. The message is used by the UE 100 to confirm that the RRC connection has been successfully set up. The base station 200 may select an AMF after receiving the RRC setup complete message. Herein, the AMF selected by the base station 200 is the AMF 300 shown in FIG. 1.

The RRC setup complete message carries the non-access stratum registration message, and the non-access stratum registration message may be used by the UE 100 to register with the AMF. The RRC setup complete message sent by the UE 100 to the base station 200 is carried on the SRB1.

In this way, in Phase 4, the UE 100 can send a NAS message to the base station 200 via the SRB1, and the base station 200 may forward the NAS message of the UE 100 to the AMF 300.

### Phase 5: registration request (registration request)

S208: The base station 200 sends an NG application protocol (NG application protocol, NGAP) initial user equipment message (Initial UE Message) and a registration request (registration request) message to the AMF 300.

An NGAP may provide a signaling service for a RAN node and an AMF node, and may provide a signaling and data connection for the UE to access a core network. After selecting the AMF 300, the base station 200 may send the initial UE message to the AMF 300. The message may notify the AMF 300 that the UE 100 is to access the core network. The message includes a radio access network user equipment NG application protocol identity (radio access network user equipment identity, RAN UE NGAP ID) allocated by the base station 200 to the UE 100. The AMF 300 may transmit a NAS message to the UE 100 via the RAN UE NGAP ID. The base station 200 may send, to the AMF 300 via the initial UE message, a NAS message (namely, the registration request message) carried in the RRC setup complete message. The registration request message may notify the AMF 300 that the UE 100 registers with the core network.

### Phase 6: non-access stratum verification procedure (NAS Procedure Identity), authentication (authentication, AUTH), and security mode command (security mode command, SMC)

S209: The AMF 300 sends an NGAP non-access stratum identity request (NAS Identity Request) message to the base station 200.

The non-access stratum identity request is used by the AMF 300 of the core network to obtain an identity of the UE 100.

S210: The base station 200 sends the non-access stratum identity request message to the UE 100.

After receiving the NAS message sent by the AMF 300, the base station 200 may forward the NAS message to the UE 100.

S211: The UE 100 sends a non-access stratum identity response (NAS Identity Response) message to the base station 200.

After receiving the NAS message from the AMF 300, the UE 100 may generate the identity response message. The identity response message carries an identity indicated by the identity request message. For example, the identity may be an international mobile subscriber identity (international mobile subscriber identity, IMSI). The UE 100 may send the identity response message to the base station 200.

S212: The base station 200 sends the NGAP non-access stratum identity response message to the AMF 300.

After receiving the NAS message sent by the UE 100, the base station 200 may forward the NAS message to the AMF 300. After receiving the identity response message from the UE 100, the AMF 300 may perform step S213 based on the identity of the UE 100 carried in the identity response message.

S213: The AMF 300 sends an NGAP non-access stratum authentication request (NAS Authentication Request) message to the base station 200.

After receiving an identity identification parameter, the AMF 300 may generate an authentication parameter carried in the non-access stratum authentication request message. The authentication parameter may include but is not limited to a random number (random, RAND) generated by the AMF 300 via a random number generator and an authentication token (authentication token, AUTN). The AMF 300 may send the non-access stratum authentication request message to the base station 200.

S214: The base station 200 sends the non-access stratum authentication request message to the UE 100.

S215: The UE 100 sends a non-access stratum authentication response (NAS Authentication Response) message to the base station 200.

After receiving, via the base station 200, the NAS authentication request message sent by the AMF 300, the UE 100 may obtain a response (response, RES) of the UE 100 through calculation based on the RAND and the AUTN in the authentication parameter. The UE 100 may send the non-access stratum authentication response message carrying the RES to the base station 200.

S216: The base station 200 sends the NGAP non-access stratum authentication response message to the AMF 300.

After receiving the non-access stratum authentication response message from the UE 100 via the base station 200, the AMF 300 may verify, based on RES, whether the UE 100 is an authorized terminal. When the AMF 300 confirms that the UE 100 is an authorized terminal (that is, authentication by the AMF 300 succeeds), the AMF 300 may provide a communication service for the UE 100.

S217: The AMF 300 sends an NGAP non-access stratum security mode command (NAS Security Mode Command) message to the base station 200.

The non-access stratum security mode command message may notify the UE 100 to start integrity protection and data encryption.

S218: The base station 200 sends the non-access stratum security mode command message to the UE 100.

S219: The UE 100 sends a non-access stratum security mode complete (NAS Security Mode Complete) message to the base station 200.

The UE 100 may determine integrity protection and encryption algorithms based on the non-access stratum security mode command message. The UE 100 may encrypt a NAS message according to the integrity and encryption algorithms. After receiving the non-access stratum security mode command message, the UE 100 may further send the non-access stratum security mode complete message to the base station 200, to indicate that the UE 100 completes security mode configuration.

S220: The base station 200 sends the NGAP non-access stratum security mode complete message to the AMF 300.

The AMF 300 may receive the non-access stratum security mode complete message from the UE 100 via the base station 200, and determine that the UE 100 encrypts the NAS message according to the agreed encryption algorithm.

S221: The AMF 300 sends an NGAP initial context setup request (initial context setup request) message and a registration accept (registration accept) message to the base station.

The AMF 300 may send the initial context setup request message to the base station 200, to start an initial context setup process. The message includes the registration accept message. The registration accept message is a NAS message.

In this way, in Phase 6, the UE 100 and the AMF 300 may transparently transmit the NAS message via the base station 200, to complete identity enquiry and authentication, NAS security mode setting, and a registration procedure of the UE 100.

### Phase 7: user equipment capability exchange (UE Capability Exchange)

S222: The base station 200 sends a user equipment capability enquiry (UE Capability Enquiry) message to the UE 100.

After receiving the initial context setup request message sent by the AMF 300, the base station 200 may send the user equipment capability enquiry message to the UE 100, to start a capability enquiry procedure of the UE 100. After obtaining a capability of the UE 100, the base station 200 may provide a resource required by the UE 100 for the UE 100.

It should be noted that, if the initial context setup request message includes an information element (information element, IE) carrying a user equipment radio capability (UE Radio Capability) of the UE 100, it indicates that the AMF 300 stores the NTN air interface capability information of the UE 100, and the base station 200 does not perform step S222. If the initial context setup request message does not include the IE carrying the UE radio capability of the UE 100, the base station 200 may obtain the NTN air interface capability information of the UE 100 in Phase 7, and send the NTN air interface capability information of the UE 100 to the AMF 300. It should be further noted that, when the UE 100 performs the NTN registration procedure or changes the capability, the initial context setup request message sent by the AMF 300 does not include the IE carrying the UE radio capability of the UE 100.

S223: The UE 100 sends a user equipment air interface capability information (UE Capability Information) message to the base station 200.

The UE 100 returns the UE capability information message to the base station 200. The message may carry the NTN air interface capability information of the UE 100, and is used by the UE 100 to report the NTN air interface capability information of the UE 100 to the base station 200. For example, the NTN air interface capability information of the UE 100 may indicate a carrier (band) supported by the UE 100, a user equipment category (UE Category) of the UE 100, an antenna polarization direction of the UE 100, maximum transmit power (a power level) of the UE 100, and a duplex mode of the UE 100.

S224: The base station 200 sends an NGAP user equipment air interface capability information indication (UE Capability Info Indication) message to the AMF 300.

The base station 200 may send the UE capability Info indication message to the AMF 300. The message may carry the NTN air interface capability information of the UE 100, and is used by the base station 200 to report the NTN air interface capability information of the UE 100 to the AMF 300. The AMF 300 may store the received NTN air interface capability information of the UE 100.

In this way, in Phase 7, both the AMF 300 and the base station 200 obtain the NTN air interface capability information of the UE 100, and the AMF 300 and the base station 200 may configure an air interface resource and a communication mode for the UE 100 based on the NTN air interface capability information of the UE 100.

### Phase 8: access stratum security mode command (access stratum security mode command, AS SMC)

S225: The base station 200 sends an access stratum security mode command message to the UE 100.

After reporting the capability of the UE 100 to the AMF 300, the base station 200 may send the access stratum security mode command message to the UE 100, to indicate the UE 100 to perform integrity protection and encryption on data, so that an RRC message can be securely transmitted between the UE 100 and the base station 200. The access stratum security mode command message may indicate a security key, an integrity key, an encryption algorithm, and an integrity protection algorithm that are used when a message is transmitted between the UE 100 and the base station 200. After the base station 200 sends the access stratum security mode command message, when sending data to the UE 100, the base station 200 may encrypt the data, set integrity protection for the data, and then send the encrypted and integrity-protected data to the UE 100.

S226: The UE 100 sends an access stratum security mode complete (AS Security Mode Complete) message to the base station 200.

After receiving the access stratum security mode command message sent by the base station 200, the UE 100 may send the access stratum security mode complete message to the base station 200. The access stratum security mode complete message is integrity-protected. The UE 100 may enable a security mode after sending the access stratum security mode complete message to the base station 200. In the security mode, the UE 100 performs integrity protection and encryption on data according to the algorithms agreed with the base station 200, and then sends the integrity-protected and encrypted data to the base station 200.

In this way, after Phase 8, the UE 100 and the base station 200 may encrypt and protect to-be-transmitted data by using the agreed keys, to ensure data transmission security.

### Phase 9: signaling radio bearer 2 (signaling radio bearer 2, SRB2) and data radio bearer (data radio bearer, DRB)

S227: The base station 200 sends a radio resource control connection reconfiguration (RRC Connection Reconfiguration) message and a registration accept message to the UE 100.

The base station 200 delivers the RRC connection reconfiguration message to the UE 100. The RRC connection reconfiguration message includes the registration accept message sent by the AMF and a parameter used to establish a radio bearer.

S228: The UE 100 sends a radio resource control connection reconfiguration complete (RRC Connection Reconfiguration Complete) message to the base station 200.

After receiving the RRC connection reconfiguration message, the UE 100 starts to establish the SRB2 and the DRB. After establishment succeeds, the UE 100 may return the RRC connection reconfiguration complete message to the base station 200. The DRB may be used to transmit data of the UE 100, for example, a transmission control protocol (transmission control protocol, TCP)/internet protocol (internet protocol, IP) data packet.

S229: The base station 200 sends an NGAP initial context setup response (initial context setup response) message to the AMF 300.

After receiving the RRC connection reconfiguration complete message, the base station 200 may send the initial context setup response message to the AMF 300.

### Phase 10: registration complete (register complete)

S230: The UE 100 sends a registration complete (register complete) message to the base station 200.

S231: The base station 200 sends the NGAP registration complete message to the AMF 300.

The base station 200 sends the registration complete message of the UE 100 to the AMF 300, and the UE 100 successfully registers with the core network.

In this way, after the steps in the foregoing 10 phases, the UE 100 successfully registers with the core network, and can send service data to the AMF 300 via the base station 200, or can receive service data from the AMF 300 via the base station 200.

### Phase 11: protocol data unit session (protocol data unit session, PDU Session)

S232: The UE 100 sends a protocol data unit session establishment request (PDU Session Establishment Request) message to the base station 200.

The PDU session establishment request message is a NAS message.

S233: The base station 200 sends the NGAP protocol data unit session establishment request message to the AMF 300.

S234: The AMF 300 sends an NGAP protocol data unit session establishment accept (PDU Session Establishment Accept) message to the base station 200.

After receiving the protocol data unit session establishment request message from the UE 100 via the base station 200, the AMF 300 may allocate a resource for a PDU session connection to the UE 100, and send the protocol data unit session establishment accept message to the UE 100 via the base station 200.

S235: The base station 200 sends the protocol data unit session establishment accept message to the UE 100.

The UE 100 sets up the PDU session connection to the AMF 300, and may transmit a PDU packet through the connection.

In this way, through step S222 to step S224, both the base station 200 and the AMF 300 obtain the NTN air interface capability information of the UE 100. A distance between the UE 100 and the base station 200 is long. To prevent the base station 200 from failing to transmit data to the UE 100, a bandwidth used by the base station 200 to transmit the data is narrow, and a small amount of data is transmitted between the UE 100 and the base station 200 in a unit time. In addition, the NTN air interface capability information of the UE occupies a large quantity of air interface resources, and quality of a channel between the UE 100 and the base station 200 is poor. Consequently, more time needs to be consumed to transmit the NTN air interface capability information of the UE between the UE 100 and the base station 200. In addition, because power consumption of the UE 100 for sending or receiving a satellite signal is high, higher power consumption is required when the UE 100 transmits the NTN air interface capability information to the base station 200.

In a possible implementation, after the capability changes, the UE 100 may send, to the NTN-RAN, a notification message indicating that the NTN air interface capability information of the UE 100 is updated. After receiving the notification message, the NTN-RAN may notify the NTN-CN to delete the stored NTN air interface capability information of the UE 100. The NTN-RAN may further obtain updated NTN air interface capability information from the UE 100, and send the updated NTN air interface capability information of the UE 100 to the NTN-CN. In this way, the UE 100 can notify the NTN-RAN after the capability changes. After receiving the capability change message of the UE 100, the NTN-RAN may re-obtain the NTN air interface capability information of the UE 100, and update the NTN air interface capability information of the UE 100 stored in the NTN-RAN and the NTN-CN.

In some examples, a status of the UE 100 may include a connected (connected) state, an idle (idle) state, and an inactive (inactive) state. If the UE 100 is in the connected state, the UE 100 may release the local connected state after the capability changes, and then update the NTN air interface capability information of the UE 100 stored in the base station 200 and the AMF 300. If the UE 100 is not in the connected state, the UE 100 may directly update the NTN air interface capability information of the UE 100 stored in the base station 200 and the AMF 300, and the UE 100 may update the NTN air interface capability information without releasing the connected state.

In some examples, after the capability changes, the UE 100 may send, to the AMF 300, a registration request message whose registration type is mobility registration (mobility registration update). The registration request message includes a parameter indicating that the capability of the UE 100 changes. After receiving the registration request message, the AMF 300 may delete the invalid NTN air interface capability information of the UE 100, and trigger the base station 200 to re-obtain the updated NTN air interface capability information of the UE 100.

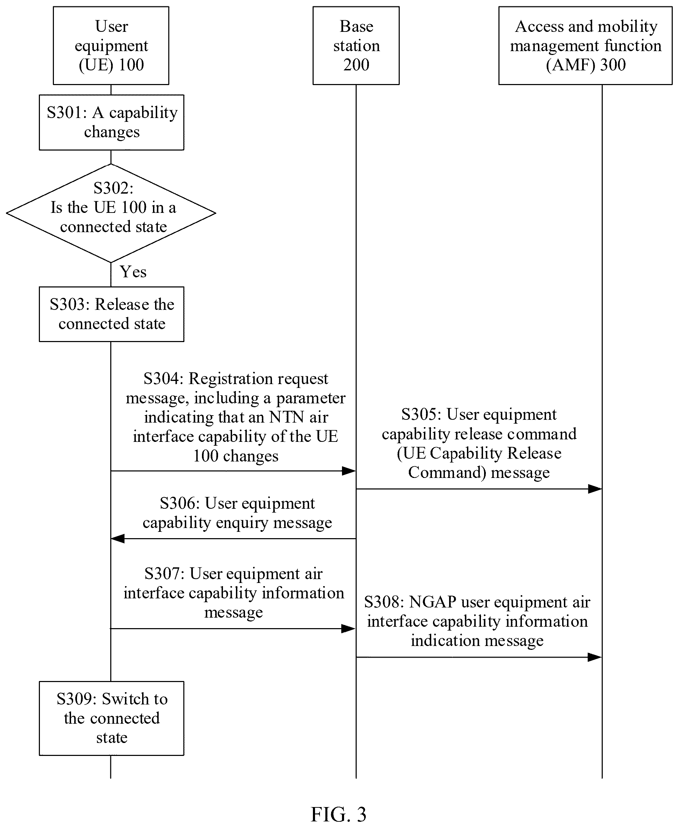

For example, as shown in FIG. 3, a capability change procedure of the UE 100 includes the following steps.

S301: The capability of the UE 100 changes.

S302: The UE 100 determines whether the UE 100 is in the connected state.

After the capability of the UE 100 changes, the UE 100 may start a procedure of updating the NTN air interface capability information of the UE 100 stored on an NTN side. First, after the capability changes, the UE 100 may determine whether the UE 100 is in the connected state. When determining that the UE 100 is in the connected state, the UE 100 may perform step S303. When the UE 100 determines that the UE 100 is not in the connected state, the UE 100 may perform step S304.

S303: The UE 100 releases the connected state.

After determining that the UE 100 is in the connected state, the UE 100 may release the local connected state, and switch to a non-connected state (for example, the idle state). After releasing the local connected state, the UE 100 may perform step S304, to notify the base station 200 to update the NTN air interface capability information of the UE 100.

S304: The UE 100 sends, to the base station 200, a registration request message, including a parameter indicating that an NTN air interface capability of the UE 100 changes.

After releasing the local connected state, the UE 100 may send the registration request message to the base station 200. The registration request message may include the parameter indicating that the NTN air interface capability of the UE 100 changes. A type of the registration request message sent by the UE 100 includes initial registration, mobility registration, and periodic registration. Herein, to update the NTN air interface capability information of the UE 100 stored in the base station 200 and the AMF 300, the UE 100 initiates the registration request message whose registration type is mobility registration.

For example, the registration request message may include a next generation radio access network radio capability update (NG-RAN Radio Capability Update) field. The NG-RAN radio capability update field may indicate whether the NTN air interface capability of the UE 100 changes. When a value of the field is 1, it indicates that the NTN air interface capability of the UE 100 changes. When the value of the field is 0, it indicates that the NTN air interface capability of the UE 100 does not change. Herein, the value of the field in the registration request message is 1.

S305: The base station 200 sends a user equipment capability release command (UE Capability Release Command) message to the AMF 300.

After receiving the parameter that is sent by the UE 100 and that indicates that the capability of the UE 100 changes, the base station 200 may send the user equipment capability release command message to the AMF 300. After receiving the user equipment capability release command message, the AMF 300 may delete the stored NTN air interface capability information of the UE 100.

S306: The base station 200 sends a user equipment capability enquiry message to the UE 100.

S307: The UE 100 sends a user equipment air interface capability information message to the base station 200.

S308: The base station 200 sends an NGAP user equipment air interface capability information indication message to the AMF 300.

After receiving NTN air interface capability information of the UE 100, the AMF 300 may store the NTN air interface capability information of the UE 100. Specifically, for descriptions of step S306 to step S308, refer to the descriptions of Phase 7 in the embodiment shown in FIG. 2A to FIG. 2D. Details are not described herein again.

S309: The UE 100 switches to the connected state.

The UE 100 may switch to the connected state after updating the NTN air interface capability information of the UE 100 stored on the NTN side. It should be noted that, after the UE 100 releases the connected state, the UE 100 releases the RRC connection to the base station 200, and maintains a registered state in the AMF 300. Then, after sending the updated NTN air interface capability information to the base station 200, the UE 100 may switch to the connected state again, and resume the RRC connection to the base station 200.

In this way, when the capability of the UE 100 changes, the UE 100 can synchronize the NTN air interface capability information of the UE 100 via the process shown in FIG. 3.

An embodiment of this application provides a capability synchronization method. The UE 100 includes an NTN communication module and a mobile communication module. The mobile communication module is bound to a subscriber identification module (subscriber identification module, SIM) 1, and the NTN communication module is bound to a SIM 2. The UE 100 may access a terrestrial network via the mobile communication module. The UE 100 may access a non-terrestrial network via the NTN communication module. After the mobile communication module registers with a terrestrial network core network, the NTN communication module may perform a registration procedure of a non-terrestrial network core network via the mobile communication module, a terrestrial network radio access network, and the terrestrial network core network. After performing the registration procedure, the NTN communication module may further send NTN air interface capability information of the UE to the non-terrestrial network core network via the mobile communication module and the terrestrial network core network.

In this way, after receiving an NTN signal, the NTN communication module of the UE 100 can access the non-terrestrial network core network. Because the UE 100 has sent the NTN air interface capability information of the UE 100 to the non-terrestrial network core network in the terrestrial network, the non-terrestrial network core network stores the NTN air interface capability information of the UE 100, and the UE 100 does not need to transmit the NTN air interface capability information to the non-terrestrial network core network in the non-terrestrial network. This reduces signaling overheads between the UE 100 and the non-terrestrial network core network, reduces time required by the UE 100 to transmit the NTN air interface capability information in the non-terrestrial network, and reduces power consumption of the UE 100.

It should be noted that binding the NTN communication module and the mobile communication module of the UE 100 to the SIMs is merely an example. The NTN communication module and the mobile communication module of the UE 100 may alternatively be bound to embedded subscriber identification modules (embedded subscriber identification modules, eSIMs). This is not limited in embodiments of this application.

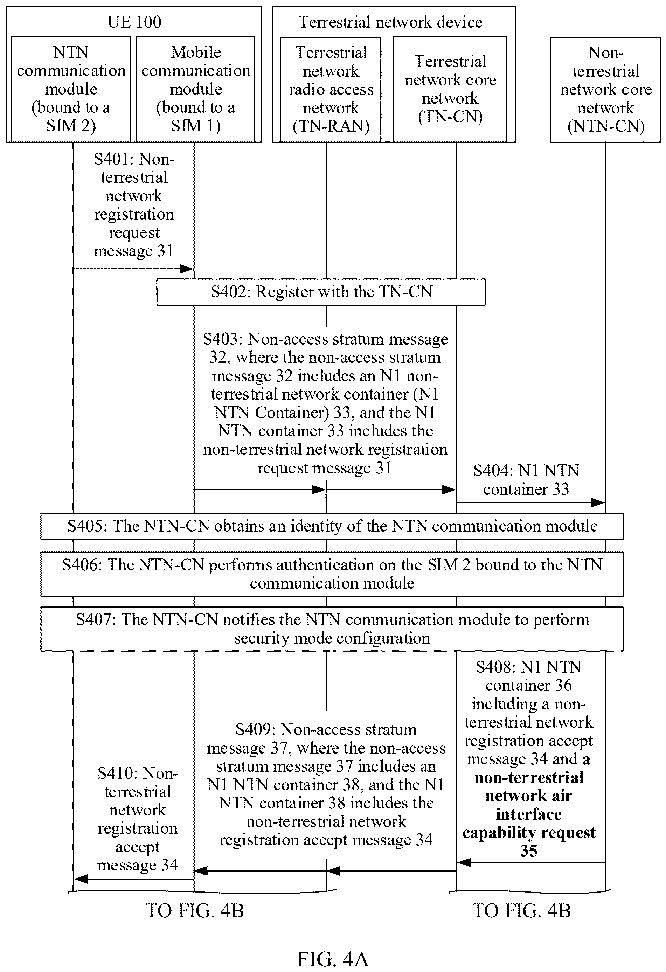

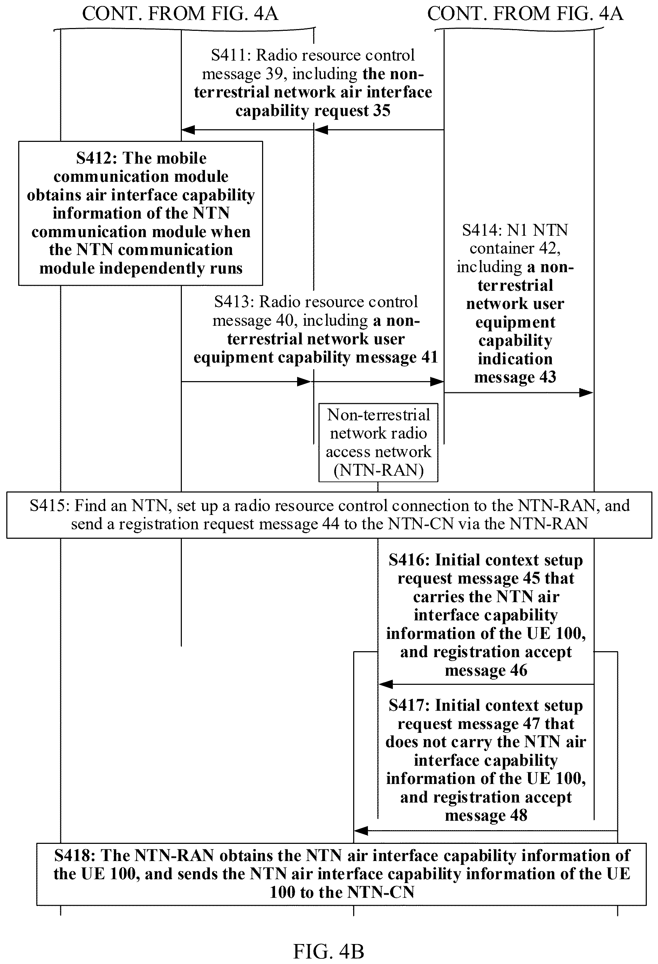

For example, as shown in FIG. 4A and FIG. 4B, the capability synchronization method provided in this embodiment of this application includes the following steps.

S401: The mobile communication module of the UE 100 receives a non-terrestrial network registration request (NTN registration request) message 31 of the NTN communication module of the UE 100.

Before initiating TN registration, the mobile communication module may receive registration request information of the NTN communication module. For example, data may be transmitted between the mobile communication module and the NTN communication module according to a NAS protocol, and the mobile communication module may obtain the non-terrestrial network registration request message 31 of the NTN communication module according to the NAS protocol. The non-terrestrial network registration request message 31 may be used to trigger the NTN-CN to start a registration procedure. A registration type of the non-terrestrial network registration request message 31 is initial registration (initial registration). The NTN communication module of the UE 100 does not register with the NTN-CN after power on, and initiates an initial registration request. For example, the non-terrestrial network registration request message 31 may be represented as an NTN registration request (initial registration).

The NTN communication module may send a registration request message to the mobile communication module after power on. Alternatively, the mobile communication module may obtain the registration request message from the NTN communication module after power on. Alternatively, the mobile communication module may obtain the registration request message from the NTN communication module before initiation of TN registration. Alternatively, the mobile communication module may obtain the registration request message after successfully registering with a TN-CN device.

S402: The mobile communication module registers with the TN-CN via the TN-RAN.

The UE 100 may register with the TN-CN after being powered on. The mobile communication module performs a network registration operation on the TN-CN. For specific descriptions of the mobile communication module registering with the TN-CN via the TN-RAN, refer to the embodiment in which the UE 100 registers with the NTN-CN via the NTN-RAN shown in FIG. 2A to FIG. 2D. Details are not described herein again. The mobile communication module successfully registers with the TN-CN.

Optionally, after successfully registering with the TN-CN, the mobile communication module may obtain the registration request message 31 of the NTN communication module.

S403: The mobile communication module sends a non-access stratum message (NAS message) 32 to the TN-CN via the TN-RAN, where the non-access stratum message 32 includes an N1 non-terrestrial network container (n1 interface non-terrestrial network container, N1 NTN Container) 33, and the N1 NTN container 33 includes the non-terrestrial network registration request message 31.

An N1 interface is a communication interface between the UE 100 and the NTN AMF 300. An N1 NTN container may be used to carry data sent by the UE 100 to the AMF 300. For example, the non-access stratum message 32 may be represented as a NAS message (N1 NTN Container (NTN registration request (initial registration))).

S404: The TN-CN sends the N1 NTN container 33 to the NTN-CN.

The TN-CN may send the N1 NTN container 33 to the NTN-CN based on information about the NTN to which the SIM 2 is subscribed, for example, an NTN public land mobile network (public land mobile network, PLMN) of the SIM 2. Specifically, an AMF of the TN-CN may send the N1 NTN container 33 to the AMF 300 of the NTN-CN. The TN-CN includes a subscription server, and the subscription server may be configured to provide an NTN subscription service. The SIM 2 may obtain the NTN subscription service via an operator of the TN-CN. The AMF of the TN-CN may obtain, from the subscription server of the TN-CN, the information about the NTN to which the SIM 2 is subscribed.

S405: The NTN-CN obtains an identity of the NTN communication module.

The AMF 300 of the NTN-CN may obtain the identity of the NTN communication module via the TN-CN, the TN-RAN, and the mobile communication module. Herein, the identity of the NTN communication module is an identifier of the SIM 2. For example, the identifier of the SIM 2 may be a subscriber concealed identifier (subscriber concealed identifier, SUCI). The AMF 300 may determine the identity of the NTN communication module based on the SUCI.

For example, the NTN-CN may send an N1 NTN container including a non-terrestrial network identity request (NTN identity request) message to the TN-CN. The non-terrestrial network identity request message is used to obtain the identity of the NTN communication module of the UE 100. The TN-CN sends a non-access stratum message including the N1 NTN container to the mobile communication module of the UE 100 via the TN-RAN. The mobile communication module of the UE 100 sends the non-terrestrial network identity request message to the NTN communication module of the UE 100.

After receiving the non-terrestrial network identity request message, the NTN communication module may generate a non-terrestrial network identity response (NTN identity response) message based on the identity of the NTN communication module, and send the non-terrestrial network identity response message to the mobile communication module. The mobile communication module sends a non-access stratum message to the TN-CN via the TN-RAN. The non-access stratum message includes an N1 NTN container, and the N1 NTN container includes the non-terrestrial network identity response message. The TN-CN sends the N1 NTN container including the non-terrestrial network identity response message to the NTN-CN. In this way, the NTN-CN obtains the identity of the NTN communication module of the UE 100 via the TN-CN, the TN-RAN, and the mobile communication module.

S406: The NTN-CN performs authentication on the SIM 2 bound to the NTN communication module.

Authentication signaling may be transmitted between the NTN-CN and the NTN communication module via the TN-CN, the TN-RAN, and the mobile communication module, so that the AMF 300 of the NTN-CN performs authentication on the SIM 2 of the UE 100.

For example, after receiving the identity of the NTN communication module, the NTN-CN may perform authentication on the NTN communication module. The NTN-CN may send an N1 NTN container including a non-terrestrial network authentication request (NTN authentication request) message to the TN-CN. The non-terrestrial network authentication request message is used to perform authentication on the SIM 2 bound to the NTN communication module of the UE 100. The TN-CN sends a non-access stratum message including the N1 NTN container to the mobile communication module of the UE 100 via the TN-RAN. The mobile communication module of the UE 100 sends the non-terrestrial network authentication request message to the NTN communication module of the UE 100.

After receiving the non-terrestrial network authentication request message, the NTN communication module may obtain an authentication response through calculation according to an authentication algorithm based on an authentication parameter of the SIM 2 and an authentication parameter of the non-terrestrial network authentication request message, and generate a non-terrestrial network authentication response (NTN authentication response) message based on the authentication response. The NTN communication module sends the non-terrestrial network authentication response message to the mobile communication module. The mobile communication module sends a non-access stratum message to the TN-CN via the TN-RAN. The non-access stratum message includes an N1 NTN container, and the N1 NTN container includes the non-terrestrial network authentication response message. The TN-CN sends the N1 NTN container including the non-terrestrial network authentication response message to the NTN-CN. The NTN-CN may determine, based on the authentication response in the non-terrestrial network authentication response message, whether authentication on the UE 100 succeeds. Herein, authentication performed by the NTN-CN on the UE 100 succeeds. In this way, the NTN-CN performs, via the TN-CN, the TN-RAN, and the mobile communication module, authentication on the SIM 2 bound to the NTN communication module of the UE 100.

S407: The NTN-CN notifies the NTN communication module to perform security mode configuration.

Signaling of a security mode command may be transmitted between the NTN-CN and the NTN communication module via the TN-CN, the TN-RAN, and the mobile communication module, so that the AMF 300 of the NTN-CN performs a security mode command operation on the UE 100. The UE 100 and the AMF 300 may use an agreed encryption algorithm and integrity algorithm, to ensure security of to-be-transmitted data.

For example, after authentication on the SIM 2 bound to the NTN communication module succeeds, the NTN-CN may notify the UE 100 to perform security mode configuration. The NTN-CN may send an N1 NTN container including a non-terrestrial network security mode command (NTN security mode command) message to the TN-CN. The non-terrestrial network security mode command message notifies the NTN communication module of the UE 100 to perform security mode configuration. The TN-CN sends a non-access stratum message including the N1 NTN container to the mobile communication module of the UE 100 via the TN-RAN. The mobile communication module of the UE 100 sends the non-terrestrial network security mode command message to the NTN communication module of the UE 100.

After receiving the non-terrestrial network security mode command message, the NTN communication module may determine the encryption algorithm and the integrity algorithm. The UE 100 may process, according to the obtained encryption algorithm and integrity algorithm, uplink data to be sent to the NTN-CN. After receiving the non-terrestrial network security mode command message, the NTN communication module may further generate a non-terrestrial network security mode complete (NTN security mode complete) message, and send the non-terrestrial network security mode complete message to the mobile communication module. The mobile communication module sends a non-access stratum message to the TN-CN via the TN-RAN. The non-access stratum message includes an N1 NTN container, and the N1 NTN container includes the non-terrestrial network security mode complete message. The TN-CN sends the N1 NTN container including the non-terrestrial network security mode complete message to the NTN-CN. The NTN-CN may determine, based on the non-terrestrial network security mode complete message, that the UE 100 completes security mode configuration. In this way, the NTN-CN notifies, via the TN-CN, the TN-RAN, and the mobile communication module, the NTN communication module of the UE 100 to perform security mode configuration.

S408: The NTN-CN sends an N1 NTN container 36 including a non-terrestrial network registration accept (NTN registration accept) message 34 and a non-terrestrial network air interface capability request 35 to the TN-CN.

After identity verification on the UE 100 succeeds, authentication succeeds, and security mode configuration succeeds, the NTN-CN may send the non-terrestrial network registration accept message 34 to the TN-CN. The non-terrestrial network registration accept message 34 may indicate that the AMF 300 of the NTN-CN accepts the registration request of the UE 100.

The NTN-CN may further send the non-terrestrial network air interface capability request 35 to the TN-CN. The non-terrestrial network air interface capability request 35 may be used to obtain NTN air interface capability information of the NTN communication module of the UE 100 when the NTN communication module independently runs.

The NTN-CN may add the non-terrestrial network registration accept message 34 and the non-terrestrial network air interface capability request 35 to the N1 NTN container 36 together, and then send the N1 NTN container 36 to the TN-CN. In some examples, the NTN-CN and the TN-CN may communicate with each other via an N14 interface. Herein, the NTN-CN sends the N1 NTN container 36 to the TN-CN via the N14 interface.

In some other examples, when registering with the TN-CN, the UE 100 may include the non-terrestrial network registration request message 31 in the registration request message used to register with the TN-CN. The UE 100 may perform step S405 to step S407 in the process of registering with the TN-CN. The TN-CN may include the non-terrestrial network registration accept message 34 when sending, to the UE 100, a registration accept message indicating that the registration of the UE 100 with the TN-CN succeeds. In this way, in the process of registering with the TN-CN, the UE 100 can perform the steps of registering with the NTN-CN via the TN-RAN and the TN-CN, thereby reducing air interface resources of the TN network.

S409: The TN-CN sends a non-access stratum message 37 to the mobile communication module of the UE 100 via the TN-RAN, where the non-access stratum message 37 includes an N1 NTN container 38, and the N1 NTN container 38 includes the non-terrestrial network registration accept message 34.

The TN-CN may parse the N1 NTN container 36, to obtain the non-terrestrial network registration accept message 34 and the non-terrestrial network air interface capability request 35. The TN-CN may encapsulate the non-terrestrial network registration accept message 34 to obtain the N1 NTN container 38, and then encapsulate the N1 NTN container 38 to obtain the non-access stratum message 37. The TN-CN may send the non-access stratum message 37 to the TN-RAN. The TN-RAN may send the non-access stratum message 37 to the mobile communication module.

S410: The mobile communication module sends the non-terrestrial network registration accept message 34 to the NTN communication module.

After receiving the non-access stratum message 37, the mobile communication module may obtain the non-terrestrial network registration accept message 34 from the non-access stratum message 37, and send the non-terrestrial network registration accept message 34 to the NTN communication module. The NTN communication module receives the non-terrestrial network registration accept message 34, and determines that registration of the UE 100 with the NTN-CN succeeds.

In some other examples, in the process of registering with the terrestrial network, the mobile communication module may perform a procedure of registering with the non-terrestrial network by the NTN communication module. When sending the terrestrial network registration request message to the TN-CN, the mobile communication module may send the non-terrestrial network registration request message of the NTN communication module to the TN-CN. The TN-CN may send the non-terrestrial network registration request message of the NTN communication module to the NTN-CN. When sending a terrestrial network registration complete message to the mobile communication module, the TN-CN may send a non-terrestrial network registration complete message of the NTN-CN to the mobile communication module. The mobile communication module may send the non-terrestrial network registration complete message to the NTN communication module. In this way, when sending signaling for registering with the terrestrial network core network to the TN-CN, the mobile communication module may include signaling for registering with the non-terrestrial network core network by the NTN communication module, thereby reducing signaling overheads. In a process in which the mobile communication module registers with the terrestrial network, the NTN communication module can register with the non-terrestrial network via the mobile communication module and the TN-CN, and the NTN-CN can obtain registration information of the NTN communication module. After the UE 100 finds a non-terrestrial network radio access network device, the NTN communication module can register with the non-terrestrial network without performing complex identity verification, authentication, and security mode command procedures. This reduces network registration time, and can reduce power consumption of the UE 100 for sending satellite data and receiving satellite data.

S411: The TN-CN sends a radio resource control message 39 to the mobile communication module of the UE 100 via the TN-RAN, where the radio resource control message 39 includes the non-terrestrial network air interface capability request 35.

The TN-CN may encapsulate the non-terrestrial network air interface capability request 35 to obtain the radio resource control message 39, and then send the radio resource control message 39 to the TN-RAN. The TN-RAN may forward the radio resource control message 39 to the mobile communication module of the UE 100.

In some other examples, the TN-CN may place the non-terrestrial network air interface capability request 35 in an N1 NTN container, then encapsulate the N1 NTN container to obtain the radio resource control message 39, and send the radio resource control message 39 to the TN-RAN. The TN-RAN may forward the radio resource control message 39 to the mobile communication module of the UE 100. Alternatively, the TN-CN may encapsulate the N1 NTN container to obtain a non-access stratum message, and send the non-access stratum message to the TN-RAN. The TN-RAN may forward the non-access stratum message to the mobile communication module of the UE 100.

In some other examples, the NTN-CN may send a non-terrestrial network air interface capability information request (NTN capability info request) message to the TN-CN. The TN-CN may forward the message to the TN-RAN. After receiving the message, the TN-RAN may send a user equipment capability enquiry message to the NTN communication module via the mobile communication module.

For example, the TN-CN may forward the non-terrestrial network air interface capability information request message to the TN-RAN according to an NGAP. The TN-RAN may generate the user equipment capability enquiry message based on the non-terrestrial network air interface capability information request message. The TN-RAN may add the user equipment capability enquiry message to an RRC message, and send the RRC message to the UE 100. For example, the RRC message includes an N1 NTN container, and the N1 NTN container includes the user equipment capability enquiry message. The user equipment capability enquiry message includes a parameter that indicates the UE 100 to send NTN air interface capability information to the TN-RAN. For example, the user equipment capability enquiry message may be a UE capability enquiry (NTN).

In some other examples, the NTN-CN may send the non-terrestrial network air interface capability information request message to the TN-CN. After receiving the message, the TN-CN may send the user equipment capability enquiry message to the TN-RAN. The TN-RAN may send the user equipment capability enquiry message to the mobile communication module. After receiving the message, the mobile communication module may perform step S412.

S412: The mobile communication module obtains air interface capability information of the NTN communication module when the NTN communication module independently runs.

After receiving the non-terrestrial network air interface capability request 35, the mobile communication module may obtain, from the NTN communication module, the air interface capability information of the NTN communication module when the NTN communication module independently runs. The air interface capability information of the NTN communication module when the NTN communication module independently runs may be referred to as the NTN air interface capability information for short. The NTN air interface capability information may include but is not limited to a carrier (band) supported by the UE 100, a user equipment category (UE Category) of the UE 100, an antenna polarization direction of the UE 100, maximum transmit power (a power level) of the UE 100, a duplex mode of the UE 100, and the like.

S413: The mobile communication module sends a radio resource control message 40 to the TN-CN via the TN-RAN, where the radio resource control message 40 includes a non-terrestrial network user equipment capability message 41.

The mobile communication module may generate the non-terrestrial network user equipment capability message 41 based on the NTN air interface capability information provided by the NTN communication module. The mobile communication module may encapsulate the non-terrestrial network user equipment capability message 41 to obtain the radio resource control message 40. The mobile communication module may send the radio resource control message 40 to the TN-RAN. The TN-RAN may send the radio resource control message 40 to the TN-CN.

S414: The TN-CN sends an N1 NTN container 42 to the NTN-CN, where the N1 NTN container 42 includes a non-terrestrial network user equipment capability indication message 43.

After receiving the radio resource control message 40, the TN-CN may parse the message, to obtain the non-terrestrial network user equipment capability message 41. The TN-CN may generate the non-terrestrial network user equipment capability indication message 43 based on the non-terrestrial network user equipment capability message 41. The TN-CN may encapsulate the non-terrestrial network user equipment capability indication message 43 to obtain the N1 NTN container 42, and send the N1 NTN container 42 to the NTN-CN. In some examples, for descriptions of the non-terrestrial network user equipment capability message, refer to the descriptions of the user equipment air interface capability information message shown in FIG. 2A to FIG. 2D. For descriptions of the non-terrestrial network user equipment capability indication message, refer to the descriptions of the user equipment air interface capability information indication message shown in FIG. 2A to FIG. 2D.

After receiving the N1 NTN container 42, the NTN-CN may parse the non-terrestrial network user equipment capability indication message 43, to obtain the NTN air interface capability information of the NTN communication module of the UE 100. After the UE 100 registers with the NTN-CN, the NTN-CN may allocate a communication resource to the UE 100 based on the NTN air interface capability information of the UE 100.

In some other examples, the mobile communication module may place the non-terrestrial network user equipment capability message 41 in an N1 NTN container, and then encapsulate the N1 NTN container to obtain the radio resource control message 40. The mobile communication module may send the radio resource control message 40 to the TN-RAN. The TN-RAN may send the radio resource control message 40 to the TN-CN. The TN-CN may obtain the non-terrestrial network user equipment capability message 41 based on the radio resource control message 40, and then perform step S414 to send the NTN air interface capability information of the UE 100 to the NTN-CN. In this way, the TN-RAN may directly forward the N1 NTN container to the TN-CN without parsing the N1 NTN container, thereby reducing transmission time.

In some other examples, the mobile communication module may obtain the radio resource control message 40 through encapsulation based on the non-terrestrial network user equipment capability message 41. The mobile communication module may send the radio resource control message 40 to the TN-RAN. The TN-RAN may parse the radio resource control message 40, to obtain the non-terrestrial network user equipment capability message 41. The TN-RAN may generate the non-terrestrial network user equipment capability indication message 43 based on the non-terrestrial network user equipment capability message 41. The TN-RAN may send the non-terrestrial network user equipment capability indication message 43 to the NTN-CN via the TN-CN, or the TN-RAN may directly send the non-terrestrial network user equipment capability indication message 43 to the NTN-CN. In this way, the TN-RAN can process a message sent by the UE 100 to the NTN-CN, so that the TN-CN does not need to process an NTN-CN message.

In some other examples, the mobile communication module may generate the non-terrestrial network user equipment capability indication message 43 based on the NTN air interface capability information. The mobile communication module may send the non-terrestrial network user equipment capability indication message 43 to the NTN-CN via the TN-RAN and the TN-CN, or the mobile communication module may send the non-terrestrial network user equipment capability indication message 43 to the NTN-CN via the TN-RAN.

It should be noted that the non-terrestrial network user equipment capability indication message 43 and the non-terrestrial network user equipment capability message 41 are merely examples. The mobile communication module may use other signaling that carries the NTN air interface capability information of the UE 100, to send the NTN air interface capability information of the UE 100 to the NTN-CN via the TN-RAN and the TN-CN. This is not limited in embodiments of this application.

In this way, through step S408 to step S414, the NTN-CN can obtain the NTN air interface capability information of the NTN communication module of the UE 100 in the TN. When the UE 100 registers with the NTN-CN, the UE 100 does not need to transmit the NTN air interface capability information of the UE 100 in the NTN. This reduces an air interface resource, time, and power consumption for transmitting the NTN air interface capability information.

S415: The UE 100 finds the NTN, sets up a radio resource control connection to the NTN-RAN, and sends a registration request message 44 to the NTN-CN via the NTN-RAN.

That the UE 100 finds the NTN may be understood as receiving a signal of the NTN. For example, the UE 100 may receive, based on PLMN information stored in the NTN communication module, a signal sent by the NTN-RAN (for example, the base station 200). After receiving the signal sent by the NTN-RAN, the UE 100 may set up the RRC connection to the NTN-RAN. For details, refer to the embodiment shown in FIG. 2A to FIG. 2D. Details are not described herein again.

It should be noted that, before the UE 100 searches for the NTN, the UE 100 needs to perform a satellite alignment operation, to align an antenna radiation direction of the UE 100 with a satellite transmission link direction of the base station 200. The UE 100 may display satellite alignment prompt information, to prompt the user to align the antenna radiation direction of the UE 100 with the satellite transmission link direction of the base station 200. After succeeding in satellite alignment, the UE 100 may receive a satellite signal with high signal quality.

After the UE 100 sets up the RRC connection to the NTN-RAN, the NTN communication module may send the registration request message 44 to the NTN-CN via the NTN-RAN. A registration type of the registration request message 44 is mobility registration (mobility registration update). For example, the registration request message 44 may be represented as a registration request (mobility registration update). The registration request message 44 includes the identity of the NTN communication module.

The NTN-CN may determine, based on the identity of the NTN communication module, whether the NTN-CN stores the NTN air interface capability information of the NTN communication module of the UE 100. The NTN-CN may perform step S416 when determining that the NTN air interface capability information of the NTN communication module of the UE 100 is stored. In this way, the devices do not need to perform steps of synchronizing the NTN air interface capability information of the UE 100 shown in steps S408 to S414. The NTN-CN may further synchronize the NTN air interface capability information of the UE 100 to the NTN-RAN.

When determining that the NTN air interface capability information of the NTN communication module of the UE 100 is not stored, the NTN-CN may perform step S417 to obtain the NTN air interface capability information of the UE 100 via the NTN-RAN.

S416: The NTN-CN sends, to the NTN-RAN, an initial context setup request message 45 that carries the NTN air interface capability information of the UE 100, and a registration accept message 46.

After receiving the registration request message 44 sent by the UE 100, the NTN-CN determines, based on the identity of the NTN communication module, that registration context and the NTN air interface capability information of the NTN communication module of the UE 100 are stored. The NTN-CN may send the registration accept message 46 to the UE 100. After receiving the registration accept message 46, the NTN-RAN may forward the registration accept message 46 to the UE 100. The registration accept message 46 may notify the UE 100 that registration with the NTN-CN succeeds.

The NTN-CN may further send the initial context setup request message 45 to the NTN-RAN. After receiving the initial context setup request message 45, the NTN-RAN may parse the message to obtain the NTN air interface capability information of the UE 100. In this way, the NTN-RAN obtains the NTN air interface capability information of the UE 100. The NTN-RAN may configure a related parameter based on the NTN air interface capability information of the UE 100, to provide an appropriate communication resource for the UE 100. In some examples, the NTN-CN may send the initial context setup request message 45 via an NGAP air interface. It should be noted that the initial context setup request message 45 is merely an example. The NTN-CN may alternatively send the NTN air interface capability information of the UE 100 to the NTN-RAN via other signaling that carries the NTN air interface capability information of the UE 100. For example, the NTN-CN may send signaling that is used only to transmit the NTN air interface capability information of the UE 100, to send the NTN air interface capability information of the UE 100 to the NTN-RAN. This is not limited in embodiments of this application.

S417: The NTN-CN sends, to the NTN-RAN, an initial context setup request message 47 that does not carry the NTN air interface capability information of the UE 100, and a registration accept message 48.

After receiving the registration request message 44 sent by the UE 100, the NTN-CN determines, based on the identity of the NTN communication module, that registration context of the NTN communication module of the UE 100 is stored. The NTN-CN may send the registration accept message 48 to the NTN-RAN. The NTN-RAN may send the registration accept message 48 to the UE 100. The registration accept message 48 may notify the UE 100 that registration with the NTN-CN succeeds.

After receiving the registration request message 44 sent by the UE 100, the NTN-CN determines, based on the identity of the NTN communication module, that the NTN air interface capability information of the NTN communication module of the UE 100 is not stored. The NTN-CN may send the initial context setup request message 47 to the NTN-RAN. After receiving the initial context setup request message 47, the NTN-RAN may parse the message, determine that the initial context setup request message 47 does not include the NTN air interface capability information of the UE 100, and perform step S418.

S418: The NTN-RAN obtains the NTN air interface capability information of the UE 100, and sends the NTN air interface capability information of the UE 100 to the NTN-CN.

For descriptions of how the NTN-RAN obtains the NTN air interface capability information of the UE 100 and synchronizes the NTN air interface capability information of the UE 100 with the NTN-CN, refer to the descriptions of step S222 to step S224 shown in FIG. 2A to FIG. 2D. Details are not described herein again.

In this way, the NTN-CN can obtain the NTN air interface capability information of the UE 100 in the TN.

In some examples, after the NTN-CN obtains the NTN air interface capability information of the UE 100, a capability of the UE 100 changes. The NTN communication module of the UE 100 may send, to the NTN-CN via the mobile communication module, the TN-RAN, and the TN-CN, a notification message indicating that the NTN air interface capability information of the UE 100 is updated. The NTN-CN may delete the stored NTN air interface capability information of the UE 100. The NTN-CN may further obtain updated NTN air interface capability information from the UE 100 via the TN-CN, the TN-RAN, and the mobile communication module. The NTN-CN may further send the NTN air interface capability information of the UE 100 to the NTN-RAN after receiving a registration request message sent by the UE 100 via the NTN-RAN. In this way, the UE 100 can notify the NTN-CN after the capability changes. After receiving the capability change message of the UE 100, the NTN-CN may re-obtain the updated NTN air interface capability information of the UE 100, to ensure reliability of the stored NTN air interface capability information of the UE 100.

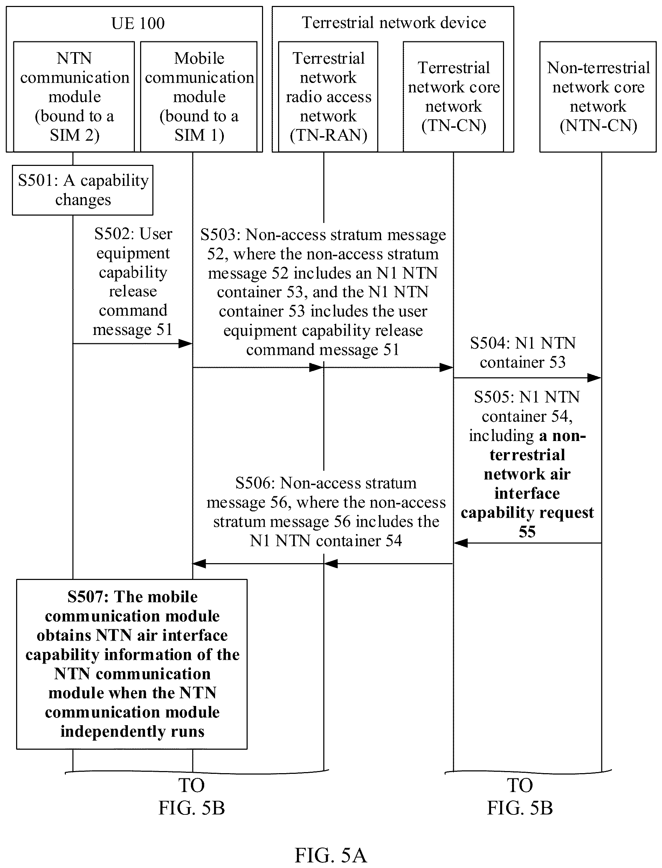

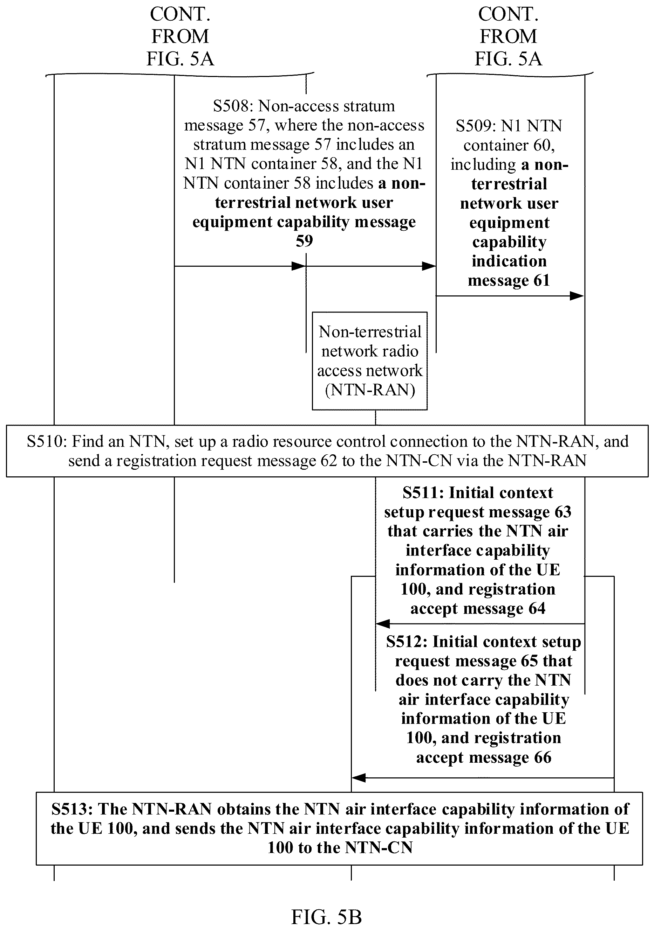

For example, as shown in FIG. 5A and FIG. 5B, a capability change procedure of the UE 100 includes the following steps.

S501: A capability of the NTN communication module changes.

After the capability changes, the NTN communication module may notify, via the mobile communication module, the TN-RAN, and the TN-CN, the NTN-CN that the capability of the UE 100 changes.

S502: The NTN communication module sends a user equipment capability release command message 51 to the mobile communication module.

Although the UE 100 sets up a communication connection to the TN-CN and is in the connected state, the UE 100 does not need to change the NTN air interface capability information stored in the TN-CN. Therefore, the UE 100 does not need to release the connected state.

The user equipment capability release command message 51 may notify the NTN-CN that the capability of the UE 100 changes.

S503: The mobile communication module sends a non-access stratum message 52 to the TN-CN via the TN-RAN, where the non-access stratum message 52 includes an N1 NTN container 53, and the N1 NTN container 53 includes the user equipment capability release command message 51.

After receiving the user equipment capability release command message 51 sent by the NTN communication module, the mobile communication module may encapsulate the user equipment capability release command message 51 to obtain the N1 NTN container 53. The mobile communication module may further encapsulate the N1 NTN container 53 to obtain the non-access stratum message 52.

S504: The TN-CN sends the N1 NTN container 53 to the NTN-CN.

After receiving the non-access stratum message 52, the TN-CN may parse the message to obtain the N1 NTN container 53, and send the N1 NTN container 53 to the NTN-CN.

S505: The NTN-CN sends an N1 NTN container 54 to the TN-CN, where the N1 NTN container 54 includes a non-terrestrial network air interface capability request 55.

After receiving the N1 NTN container 53, the NTN-CN may parse the N1 NTN container 53 to obtain the user equipment capability release command message 51. The NTN-CN may delete the NTN air interface capability information of the UE 100, and send the N1 NTN container 54 including the non-terrestrial network air interface capability request 55 to the TN-CN. The non-terrestrial network air interface capability request 55 is used to obtain the NTN air interface capability information of the UE 100.

In some other examples, the NTN communication module may send a registration request message whose registration type is mobility registration to the mobile communication module. The registration request message indicates that an NTN air interface capability of the UE 100 changes. The mobile communication module may send the registration request message to the TN-RAN. The TN-RAN may generate a user equipment capability release command message based on the registration request message. The TN-RAN may send the user equipment capability release command message to the TN-CN, and the TN-CN sends the message to the NTN-CN. Alternatively, the TN-RAN may send the user equipment capability release command message to the NTN-CN. In this way, the TN-RAN can send, to the NTN-CN, the message indicating that the NTN air interface capability of the UE 100 changes.

In some other examples, the NTN communication module may send a registration request message whose registration type is mobility registration to the mobile communication module. The mobile communication module may send the registration request message to the TN-CN via the TN-RAN. The TN-CN may generate a user equipment capability release command message based on the registration request message. The TN-CN may send the message to the NTN-CN.

S506: The TN-CN sends a non-access stratum message 56 to the mobile communication module via the TN-RAN, where the non-access stratum message 56 includes the N1 NTN container 54.

After receiving the N1 NTN container 54, the TN-CN may encapsulate the N1 NTN container 54 to obtain the non-access stratum message 56, and send the non-access stratum message 56 to the mobile communication module via the TN-RAN.

In some other examples, the TN-CN may place the non-terrestrial network air interface capability request 55 in an N1 NTN container, then encapsulate the N1 NTN container to obtain a radio resource control message, and send the radio resource control message to the TN-RAN. The TN-RAN may forward the radio resource control message to the mobile communication module of the UE 100.

In some other examples, after determining that the NTN air interface capability of the UE 100 changes, the NTN-CN may send a non-terrestrial network air interface capability information request message to the TN-CN. The TN-CN may forward the message to the TN-RAN. After receiving the message, the TN-RAN may send a user equipment capability enquiry message to the mobile communication module. For details, refer to the embodiment shown in FIG. 4A and FIG. 4B. Details are not described herein again.

In some other examples, the NTN-CN may send the non-terrestrial network air interface capability information request message to the TN-CN. After receiving the message, the TN-CN may send the user equipment capability enquiry message to the TN-RAN. The TN-RAN may send the user equipment capability enquiry message to the mobile communication module. After receiving the message, the mobile communication module may perform step S507.

S507: The mobile communication module obtains NTN air interface capability information of the NTN communication module when the NTN communication module independently runs.

For descriptions of S507, refer to the descriptions of step S412 shown in FIG. 4A and FIG. 4B. Details are not described herein again.

S508: The mobile communication module sends a non-access stratum message 57 to the TN-CN via the TN-RAN, where the non-access stratum message 57 includes an N1 NTN container 58, and the N1 NTN container 58 includes a non-terrestrial network user equipment capability message 59.

After obtaining the NTN air interface capability information of the NTN communication module when the NTN communication module independently runs, the mobile communication module may generate the non-terrestrial network user equipment capability message 59 based on the NTN air interface capability information. The mobile communication module may further obtain the N1 NTN container 58 through encapsulation based on the non-terrestrial network user equipment capability message 59, and then encapsulate the N1 NTN container 58 to obtain the non-access stratum message 57. The mobile communication module may send the non-access stratum message 57 to the TN-CN via the TN-RAN. For descriptions of step 508, refer to the descriptions of step S413 shown in FIG. 4A and FIG. 4B. Details are not described herein again.

S509: The TN-CN sends an N1 NTN container 60 to the NTN-CN, where the N1 NTN container 60 includes a non-terrestrial network user equipment capability indication message 61.

The non-terrestrial network user equipment capability indication message 61 may include the NTN air interface capability information of the UE 100. An NTN-CN device may obtain the NTN air interface capability information of the UE 100 based on the message.

S510: The UE 100 finds the NTN, sets up a radio resource control connection to the NTN-RAN, and sends a registration request message 62 to the NTN-CN via the NTN-RAN.

The NTN-CN may determine, based on the identity of the NTN communication module, whether the NTN-CN stores the NTN air interface capability information of the NTN communication module of the UE 100. The NTN-CN may perform step S511 when determining that the NTN air interface capability information of the NTN communication module of the UE 100 is stored. The NTN-CN may perform step S512 when determining that the NTN air interface capability information of the NTN communication module of the UE 100 is not stored.

S511: The NTN-CN sends, to the NTN-RAN, an initial context setup request message 63 that carries the NTN air interface capability information of the UE 100, and a registration accept message 64.

S512: The NTN-CN sends, to the NTN-RAN, an initial context setup request message 65 that does not carry the NTN air interface capability information of the UE 100, and a registration accept message 66.

S513: The NTN-RAN obtains the NTN air interface capability information of the UE 100, and sends the NTN air interface capability information of the UE 100 to the NTN-CN.

For descriptions of step S509 to step S513, refer to the descriptions of step S414 to step S418 shown in FIG. 4A and FIG. 4B. Details are not described herein again.

In this way, when the capability of the UE 100 when the NTN communication module independently runs changes in the TN, the UE 100 can synchronize the updated NTN air interface capability information of the UE 100 to the NTN-CN through the steps shown in FIG. 5A and FIG. 5B.

In a possible implementation, the NTN communication module may perform a registration procedure of a non-terrestrial network core network via the mobile communication module and a terrestrial network radio access network. The NTN communication module may further send NTN air interface capability information of the UE to the non-terrestrial network core network via the mobile communication module and the terrestrial network radio access network. In this way, the UE 100 can transmit signaling to the NTN-CN via the TN-RAN in the terrestrial network, and receive, via the TN-RAN, signaling sent by the NTN-CN. The UE 100 and the NTN-CN can implement a signaling exchange procedure via the TN-RAN without relaying by the TN-CN, thereby reducing time required for signaling transmission.

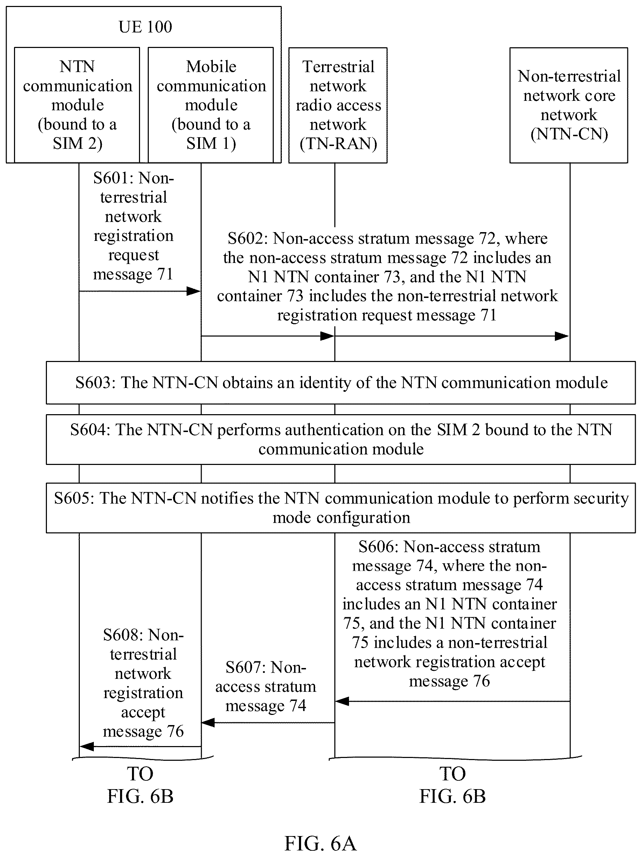

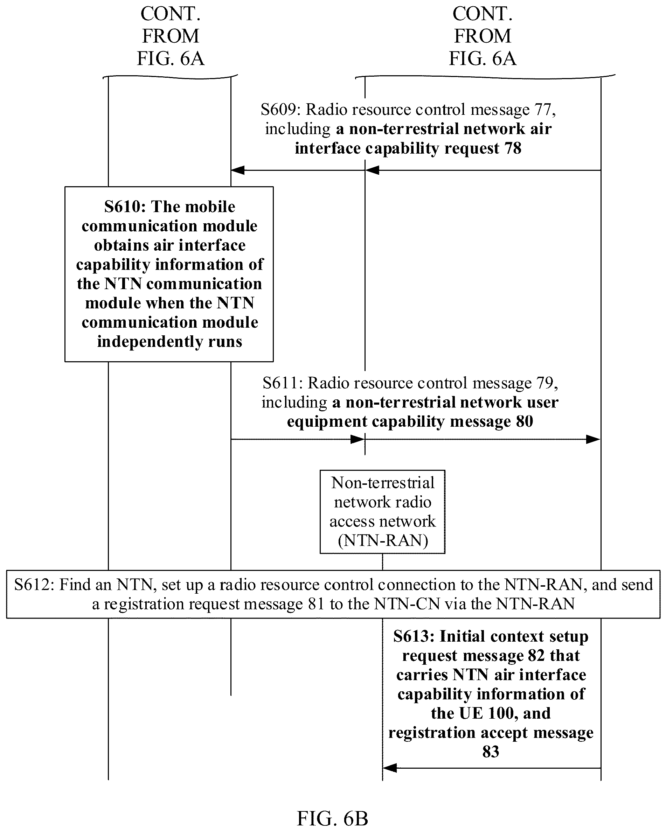

For example, as shown in FIG. 6A and FIG. 6B, the capability synchronization method includes the following steps.

S601: The mobile communication module of the UE 100 receives a non-terrestrial network registration request message 71 of the NTN communication module.

For details, refer to the descriptions of step S401 shown in FIG. 4A and FIG. 4B. Details are not described herein again.

S602: The mobile communication module of the UE 100 sends a non-access stratum message 72 to the NTN-CN via the TN-RAN, where the non-access stratum message 72 includes an N1 NTN container 73, and the N1 NTN container 73 includes the non-terrestrial network registration request message 71.

For example, the non-access stratum message 72 may be represented as a NAS message 72 (N1 NTN Container 73 (NTN registration request 71 (initial registration))). In this way, compared with that in step S403 and step S404 shown in FIG. 4A and FIG. 4B, the UE 100 can send the non-access stratum message 72 to the NTN-CN only via the TN-RAN without transfer by the TN-CN.

S603: The NTN-CN obtains an identity of the NTN communication module.

The NTN-CN may obtain the identity of the NTN communication module via the TN-RAN and the mobile communication module. Herein, the identity of the NTN communication module is an identifier of the SIM 2.

For example, the NTN-CN may send a non-access stratum message to the mobile communication module of the UE 100 via the TN-RAN. The non-access stratum message includes an N1 NTN container, and the N1 NTN container includes a non-terrestrial network identity request message. The non-terrestrial network identity request message is used to obtain the identity of the NTN communication module of the UE 100. The mobile communication module of the UE 100 sends the non-terrestrial network identity request message to the NTN communication module of the UE 100.

After receiving the non-terrestrial network identity request message, the NTN communication module may generate a non-terrestrial network identity response message based on the identity of the NTN communication module, and send the non-terrestrial network identity response message to the mobile communication module. The mobile communication module sends a non-access stratum message to the NTN-CN via the TN-RAN. The non-access stratum message includes an N1 NTN container, and the N1 NTN container includes the non-terrestrial network identity response message. In this way, the NTN-CN obtains the identity of the NTN communication module of the UE 100 via the TN-RAN and the mobile communication module. Compared with that in step S405 shown in FIG. 4A and FIG. 4B, a resource consumed by the NTN-CN for transfer is reduced.

S604: The NTN-CN performs authentication on the SIM 2 bound to the NTN communication module.

For example, the NTN-CN may send a non-access stratum message to the mobile communication module of the UE 100 via the TN-RAN. The non-access stratum message includes an N1 NTN container, and the N1 NTN container includes a non-terrestrial network authentication request message. The non-terrestrial network authentication request message is used to perform authentication on the SIM 2 bound to the NTN communication module of the UE 100. The mobile communication module of the UE 100 sends the non-terrestrial network authentication request message to the NTN communication module of the UE 100.

After receiving the non-terrestrial network authentication request message, the NTN communication module may obtain an authentication response through calculation according to an authentication algorithm based on an authentication parameter of the SIM 2 and an authentication parameter of the non-terrestrial network authentication request message, and generate a non-terrestrial network authentication response message based on the authentication response. The NTN communication module sends the non-terrestrial network authentication response message to the mobile communication module. The mobile communication module sends a non-access stratum message to the NTN-CN via the TN-RAN. The non-access stratum message includes an N1 NTN container, and the N1 NTN container includes the non-terrestrial network authentication response message. The NTN-CN may determine, based on the authentication response in the non-terrestrial network authentication response message, whether authentication on the UE 100 succeeds. Herein, authentication performed by the NTN-CN on the UE 100 succeeds. In this way, the NTN-CN performs, via the TN-RAN and the mobile communication module, authentication on the SIM 2 bound to the NTN communication module of the UE 100. Compared with that in step S406 shown in FIG. 4A and FIG. 4B, a resource consumed by the NTN-CN for transfer is reduced.

S605: The NTN-CN notifies the NTN communication module to perform security mode configuration.

For example, the NTN-CN may send a non-access stratum message to the mobile communication module of the UE 100 via the TN-RAN. The non-access stratum message includes an N1 NTN container, and the N1 NTN container includes a non-terrestrial network security mode command message. The non-terrestrial network security mode command message notifies the NTN communication module of the UE 100 to perform security mode configuration. The mobile communication module of the UE 100 sends the non-terrestrial network security mode command message to the NTN communication module of the UE 100.

After receiving the non-terrestrial network security mode command message, the NTN communication module may determine an encryption algorithm and an integrity algorithm. The UE 100 may process, according to the obtained encryption algorithm and integrity algorithm, uplink data to be sent to the NTN-CN. After receiving the non-terrestrial network security mode command message, the NTN communication module may further generate a non-terrestrial network security mode complete (NTN security mode complete) message, and send the non-terrestrial network security mode complete message to the mobile communication module. The mobile communication module sends a non-access stratum message to the NTN-CN via the TN-RAN. The non-access stratum message includes an N1 NTN container, and the N1 NTN container includes the non-terrestrial network security mode complete message. The NTN-CN may determine, based on the non-terrestrial network security mode complete message, that the UE 100 completes security mode configuration. In this way, the NTN-CN notifies, via the TN-RAN and the mobile communication module, the NTN communication module of the UE 100 to perform security mode configuration. Compared with that in step S406 shown in FIG. 4A and FIG. 4B, a resource consumed by the NTN-CN for transfer is reduced.

S606: The NTN-CN sends a non-access stratum message 74 to the TN-RAN, where the non-access stratum message 74 includes an N1 NTN container 75, and the N1 NTN container 75 includes a non-terrestrial network registration accept message 76.

S607: The TN-RAN sends the non-access stratum message 74 to the mobile communication module of the UE 100.

After identity verification on the UE 100 succeeds, authentication succeeds, and security mode configuration succeeds, the NTN-CN may send the non-terrestrial network registration accept message 76 to the mobile communication module via the TN-RAN. The non-terrestrial network registration accept message 76 may indicate that the NTN-CN accepts a registration request of the UE 100.

S608: The mobile communication module sends the non-terrestrial network registration accept message 76 to the NTN communication module.

S609: The NTN-CN sends a radio resource control message 77 to the mobile communication module of the UE 100 via the TN-RAN, where the radio resource control message includes a non-terrestrial network air interface capability request 78.

The NTN-CN may further send, to the mobile communication module via the TN-RAN, the radio resource control message 77 including the non-terrestrial network air interface capability request 78. The non-terrestrial network air interface capability request 78 may be used to obtain NTN air interface capability information of the NTN communication module of the UE 100 when the NTN communication module independently runs. For example, the NTN-CN may place the non-terrestrial network air interface capability request 78 in an N1 NTN container, and then encapsulate the N1 NTN container to obtain the radio resource control message 77.

In some other examples, the NTN-CN may send a NAS message including the non-terrestrial network air interface capability request 78 to the TN-RAN. For example, the NTN-CN may place the non-terrestrial network air interface capability request 78 in an N1 NTN container, and then encapsulate the N1 NTN container to obtain the NAS message. The TN-RAN may obtain an RRC message through encapsulation based on the NAS message, and then send the RRC message to the mobile communication module of the UE 100.

In some other examples, the NTN-CN may send a non-terrestrial network air interface capability information request message to the TN-RAN. After receiving the message, the TN-RAN may send a user equipment capability enquiry message to the NTN communication module via the mobile communication module. The user equipment capability enquiry message includes a parameter that indicates the UE 100 to send the NTN air interface capability information to the TN-RAN.

For example, the NTN-CN may forward the non-terrestrial network air interface capability information request message to the TN-RAN according to an NGAP. The TN-RAN may generate the user equipment capability enquiry message based on the non-terrestrial network air interface capability information request message. An NTN-RAN may add the user equipment capability enquiry message to an RRC message, and send the RRC message to the UE 100. For example, the RRC message includes an N1 NTN container, and the N1 NTN container includes the user equipment capability enquiry message. For example, the user equipment capability enquiry message may be a UE capability enquiry (NTN).

In some examples, the NTN-CN may place the non-terrestrial network registration accept message 76 and the non-terrestrial network air interface capability request 78 in a same NAS message, and send the NAS message to the TN-RAN. The TN-RAN may obtain an RRC message 84 based on the non-terrestrial network registration accept message 76, and send the RRC message 84 to the UE 100. The TN-RAN may further obtain an RRC message 85 based on the non-terrestrial network air interface capability request 78, and send the RRC message 85 to the UE 100.

S610: The mobile communication module obtains the air interface capability information of the NTN communication module when the NTN communication module independently runs.

For details, refer to the embodiment shown in FIG. 4A and FIG. 4B. Details are not described herein again.

S611: The mobile communication module sends a radio resource control message 79 to the NTN-CN via the TN-RAN, where the radio resource control message 79 includes a non-terrestrial network user equipment capability message 80.

For example, the mobile communication module may generate the non-terrestrial network user equipment capability message 80 based on the NTN air interface capability information provided by the NTN communication module. The mobile communication module may encapsulate the non-terrestrial network user equipment capability message 80 to obtain the radio resource control message 79. The mobile communication module may send the radio resource control message 79 to the TN-RAN. The TN-RAN may send the radio resource control message 79 to the NTN-CN. Optionally, the mobile communication module may encapsulate the non-terrestrial network user equipment capability message 80 to obtain a NAS message, and then encapsulate the NAS message to obtain the radio resource control message 79. The TN-RAN may send the NAS message to the NTN-CN.

In some examples, the mobile communication module may send the non-terrestrial network user equipment capability message 80 to the TN-RAN. The TN-RAN may generate a non-terrestrial network user equipment capability indication message based on the non-terrestrial network user equipment capability message 80. The TN-RAN may send the non-terrestrial network user equipment capability indication message to the NTN-CN. For descriptions of sending the message by the mobile communication module to the TN-RAN, refer to the embodiment shown in FIG. 4A and FIG. 4B. Details are not described herein again. For descriptions of sending the message by the TN-RAN to the NTN-CN, refer to the descriptions of sending the message by the TN-RAN to the TN-CN in FIG. 4A and FIG. 4B, or refer to the descriptions of sending the message by the TN-CN to the NTN-CN in FIG. 4A and FIG. 4B. Details are not described herein again.

It should be noted that the non-terrestrial network user equipment capability indication message and the non-terrestrial network user equipment capability message 80 are merely examples. The mobile communication module may use other signaling that carries the NTN air interface capability information of the UE 100, to send the NTN air interface capability information of the UE 100 to the NTN-CN via the TN-RAN. This is not limited in embodiments of this application.

S612: The UE 100 finds the NTN, sets up a radio resource control connection to the NTN-RAN, and sends a registration request message 81 to the NTN-CN via the NTN-RAN.

S613: The NTN-CN sends, to the NTN-RAN, an initial context setup request message 82 that carries the NTN air interface capability information of the UE 100, and a registration accept message 83.

For descriptions of step S612 and step S613, refer to the embodiment shown in FIG. 4A and FIG. 4B. Details are not described herein again. In this way, the UE 100 and the NTN-CN can implement a signaling exchange procedure via the TN-RAN without relaying by the TN-CN, thereby reducing time required for signaling transmission.

In a possible implementation, the UE 100 includes a SIM 3. The UE 100 may use a communication service of a TN via the SIM 3, and may use a roaming service of an NTN. When registering with the TN network, the UE 100 may send NTN capability information of the SIM 3 to a TN-CN. The TN-CN may send an equivalent public land mobile network (equivalent public land mobile network, EPLMN) list of an NTN PLMN to the UE 100. The UE 100 may send an air interface capability change message to the TN-CN after receiving the list. The air interface capability change message may be used to trigger the TN-CN to obtain NTN air interface capability information of the UE 100. The UE 100 may search for the NTN based on the EPLMN list, and send a registration request message to an NTN-CN. After receiving the registration request message of the UE 100, the NTN-CN may obtain registration context of the UE 100 and the NTN air interface capability information of the UE 100 from the TN-CN. The NTN-CN may send the NTN air interface capability information of the UE 100 to an NTN-RAN. In this way, the UE 100 can send the NTN air interface capability information of the UE 100 to the TN-CN in the TN. When receiving the registration request message of the UE 100, the NTN-CN may obtain the registration context of the UE 100 and the NTN air interface capability information of the UE 100 from the TN-CN, thereby reducing an air interface resource of the NTN.

In some examples, the air interface capability change message includes a parameter indicating that an NTN air interface capability of the UE 100 changes. For example, the air interface capability change message may be a registration request message whose registration type is mobility registration or a user equipment capability release command message.

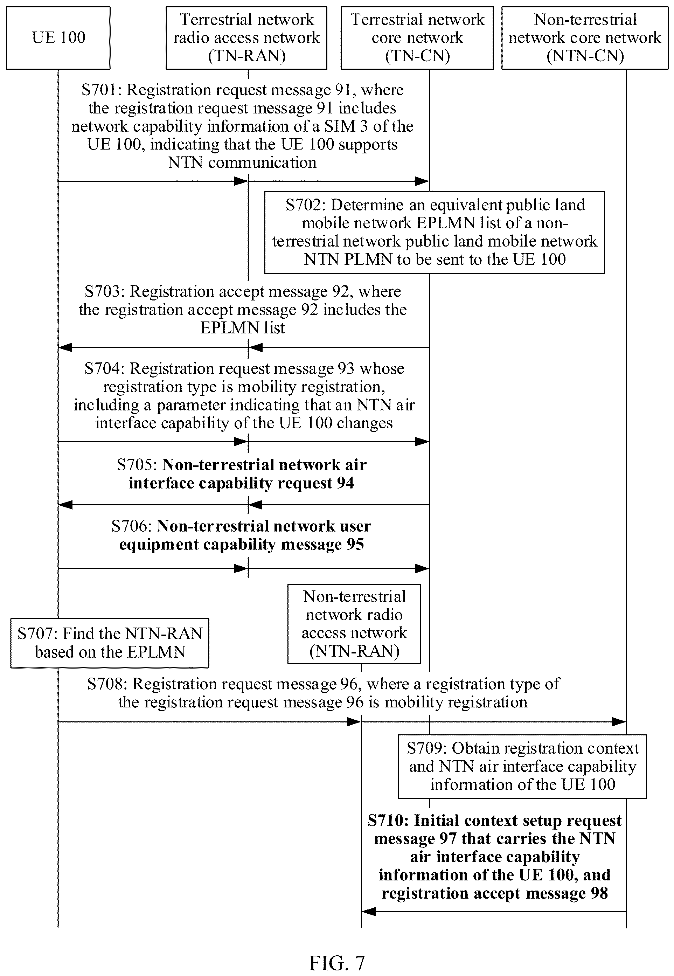

For example, as shown in FIG. 7, a capability synchronization method provided in this embodiment of this application includes the following steps.

S701: The UE 100 sends a registration request message 91 to the TN-CN via a TN-RAN, where the registration request message 91 includes network capability information of the SIM 3 of the UE 100, indicating that the UE 100 supports NTN communication.

The UE 100 may include the network capability information of the UE 100 when sending the registration request message 91 to the TN-CN. The network capability information may indicate that the UE 100 supports access to the NTN-CN. The UE 100 may send the registration request message 91 to the TN-CN via the mobile communication module. The registration request message 91 is used by the UE 100 to register with the TN-CN.

S702: The TN-CN determines the equivalent public land mobile network EPLMN list of the non-terrestrial network public land mobile network NTN PLMN of the UE 100.

The TN-CN and the NTN-CN reach a roaming agreement, and the TN-CN stores an EPLMN list of the NTN-CN. After receiving the registration request message 91 sent by the UE 100, the TN-CN determines that the UE 100 has a capability of communicating with the NTN, and determines and sends the EPLMN list of the NTN PLMN of the SIM 3 of the UE 100 to the UE 100. The EPLMN list indicates the NTN EPLMN of the SIM 3.

S703: The TN-CN sends a registration accept message 92 to the UE 100 via the TN-RAN, where the registration accept message 92 includes the EPLMN list.

The TN-CN may add the EPLMN list to the registration accept message 92, and send the registration accept message 92 to the UE 100 via the TN-RAN. It should be noted that, between step S701 and step S703, the UE 100 and the TN-CN further perform network registration steps such obtaining an identity and authentication. Specifically, for specific descriptions of registration of the UE 100 with the TN-CN, refer to the embodiment shown in FIG. 2A to FIG. 2D. Details are not described herein again.

S704: The UE 100 sends a registration request message 93 whose registration type is mobility registration to the TN-CN via the TN-RAN, where the registration request message 93 includes the parameter indicating that the NTN air interface capability of the UE 100 changes.

For example, for descriptions of the registration request message 93, refer to the descriptions of step S304 shown in FIG. 3. Details are not described herein again.

S705: The TN-CN sends a non-terrestrial network air interface capability request 94 to the UE 100 via the TN-RAN.

The non-terrestrial network air interface capability request 94 may be used by the TN-CN to obtain the NTN air interface capability information of the UE 100.

In some examples, the TN-CN may add the non-terrestrial network air interface capability request 94 to an N1 NTN container, then encapsulate the N1 NTN container to obtain a non-access stratum message, and finally send the non-access stratum message to the UE 100 via the TN-RAN. Alternatively, the TN-CN may encapsulate the N1 NTN container to obtain a radio resource control message, and finally send the radio resource control message to the UE 100 via the TN-RAN.

In some other examples, the TN-CN may send a non-terrestrial network air interface capability information request to the TN-RAN. After receiving the message, the TN-RAN may send a user equipment capability enquiry message to the NTN communication module via the mobile communication module.

For example, the TN-CN may send the non-terrestrial network air interface capability information request to the TN-RAN according to an NGAP. The TN-RAN may add the user equipment capability enquiry message to an RRC message, and send the RRC message to the UE 100. For example, the RRC message includes an N1 NTN container, and the N1 NTN container includes the user equipment capability enquiry message. The user equipment capability enquiry message includes a parameter that indicates the UE 100 to send the NTN air interface capability information to the TN-RAN. For example, the user equipment capability enquiry message may be a UE capability enquiry (NTN).

It should be noted that the foregoing signaling is merely examples. The TN-CN, the TN-RAN, and the UE 100 may synchronize the NTN air interface capability information of the UE 100 via other signaling having same functions. For example, the TN-CN may send the non-terrestrial network air interface capability information request to the UE 100 via the TN-RAN, to obtain the NTN air interface capability information of the UE 100.

S706: The UE 100 sends a non-terrestrial network user equipment capability message 95 to the TN-CN via the TN-RAN.

After receiving the non-terrestrial network air interface capability request 94, the UE 100 may generate the non-terrestrial network user equipment capability message 95 based on the NTN air interface capability information. The UE 100 may send the non-terrestrial network user equipment capability message 95 to the TN-CN via the TN-RAN.

After receiving the non-terrestrial network user equipment capability message 95, the TN-CN may store an identifier of the UE 100 and the NTN air interface capability information of the UE 100.

In some examples, the UE 100 may add the non-terrestrial network air interface capability message 95 to an N1 NTN container, then encapsulate the N1 NTN container to obtain a non-access stratum message, and finally send the non-access stratum message to the TN-CN via the TN-RAN. Alternatively, the UE 100 may encapsulate the N1 NTN container to obtain a radio resource control message, and finally send the radio resource control message to the TN-CN via the TN-RAN.

In some other examples, the UE 100 may send the non-terrestrial network user equipment capability message 95 to the TN-RAN. After receiving the non-terrestrial network user equipment capability message 95, the TN-RAN may send a non-terrestrial network user equipment capability indication message to the TN-CN. The non-terrestrial network user equipment capability indication message is used by the TN-RAN to synchronize the NTN air interface capability information of the UE 100 to the TN-CN.

For example, the UE 100 may add the non-terrestrial network user equipment capability message 95 to an N1 NTN container, then encapsulate the N1 NTN container to obtain an RRC message, and finally send the RRC message to the TN-RAN. The TN-RAN may generate the non-terrestrial network user equipment capability indication message based on the non-terrestrial network user equipment capability message 95, then add the non-terrestrial network user equipment capability indication message to an N1 NTN container, and send the N1 NTN container to the TN-CN.

It should be noted that the non-terrestrial network user equipment capability message is merely an example. The UE 100 may alternatively send the NTN air interface capability information of the UE 100 to the TN-CN via other signaling. For example, the UE 100 may send the non-terrestrial network user equipment capability indication message to the TN-CN via the TN-RAN, to synchronize the NTN air interface capability information of the UE 100. For another example, the UE 100 may send the non-terrestrial network user equipment capability message to the TN-CN via the TN-RAN, to synchronize NTN air interface capability information of the UE 100. This is not limited in embodiments of this application.

S707: The UE 100 finds the NTN-RAN based on the EPLMN.

The UE 100 may search for the NTN-RAN based on the EPLMN. The UE 100 may further set up an RRC connection to the NTN-RAN. For details, refer to the embodiment shown in FIG. 2A to FIG. 2D. Details are not described herein again. It should be noted that, to make the UE 100 receive a high-quality NTN signal, the UE 100 may perform a satellite alignment operation before performing step S707.

S708: The UE 100 sends a registration request message 96 to the NTN-CN via the NTN-RAN, where a registration type of the registration request message 96 is mobility registration.

The UE 100 may send the registration request message 96 whose registration type is mobility registration to the NTN-CN via the NTN-RAN. The registration request message 96 includes the identifier of the UE 100, and is used to prompt the NTN-CN to obtain the registration context of the UE 100 and the NTN air interface capability information of the UE 100 from the TN-CN. The identifier of the UE 100 may be an identifier of the SIM 3, for example, an SUCI of the SIM 3. For example, the registration request message 96 may be a registration request (mobility registration update). Both the mobile communication module and the NTN communication module of the UE 100 are bound to the SIM 3. The UE 100 may send the registration request message 96 to the NTN-RAN via the NTN communication module. The NTN-RAN may send the registration request message 96 to the NTN-CN.

S709: The NTN-CN obtains the registration context and the NTN air interface capability information of the UE 100 from the TN-CN.

After receiving the registration request message 96, the NTN-CN may obtain the registration context and the NTN air interface capability information of the UE 100 from the TN-CN. The registration context of the UE 100 may indicate whether authentication, data encryption, and the like are performed on the UE 100 The NTN air interface capability information may indicate an air interface transmission capability of the UE 100. For example, the registration context of the UE 100 may include but is not limited to paging (paging) capability information of the UE 100, an aggregate maximum bit rate (aggregate maximum bit rate, AMBR) of the UE 100, authentication information of the UE 100, and a security mode configuration of the UE 100. The NTN-CN may ensure, based on security mode configuration information of the UE 100, integrity and security of data to be transmitted with the UE 100. In this way, in a process of registering with the NTN-CN, the UE 100 does not need to perform steps such as authentication and security mode configuration, thereby reducing registration time. For example, the NTN air interface capability information of the UE 100 may include but is not limited to a carrier supported by the UE 100, a user equipment category of the UE 100, an antenna polarization direction of the UE 100, maximum transmit power (a power level) of the UE 100, and a duplex mode of the UE 100. In this way, the NTN-CN does not need to obtain the NTN air interface capability information of the UE 100 via the NTN-RAN, thereby reducing an air interface resource of the NTN and reducing time for synchronizing the NTN air interface capability information of the UE 100 between the UE 100 and the NTN-CN.

In some other examples, the TN-CN may place the NTN air interface capability information in the registration context, and then send the registration context of the UE 100 to the NTN-CN. In this way, the registration context of the UE 100 can include the NTN air interface capability information of the UE 100, and the TN-CN can send, to the NTN-CN via only one piece of signaling, data required by the NTN-CN.

S710: The NTN-CN sends, to the UE 100 via the NTN-RAN, an initial context setup request message 97 that carries the NTN air interface capability information, and a registration accept message 98.

After obtaining the registration context and the NTN air interface capability information of the UE 100, the NTN-CN may send, to the UE 100 via the NTN-RAN, the initial context setup request message 97 that carries the NTN air interface capability information of the UE 100, and the registration accept message 98. The registration accept message 98 indicates that the UE 100 successfully registers with the NTN-CN. The NTN-RAN may send the registration accept message 98 to the UE 100.

After receiving the initial context setup request message 97, the NTN-RAN may parse the message to obtain the NTN air interface capability information of the UE 100. It should be noted that the initial context setup request message 97 is merely an example. The NTN-CN may alternatively send the NTN air interface capability information of the UE 100 to the NTN-RAN via other signaling. For example, the UE 100 may send signaling that is used only to transmit the NTN air interface capability information of the UE 100, to send the NTN air interface capability information of the UE 100 to the NTN-RAN.

It should be noted that, if the NTN-CN does not obtain the NTN air interface capability information of the UE 100 from the TN-CN, the NTN-CN may send, to the NTN-RAN, an NGAP initial context setup request message that does not carry the NTN air interface capability information of the UE 100. The NTN-RAN receives the message and determines that the message does not include the NTN air interface capability information of the UE 100, and may obtain the NTN air interface capability information of the UE 100, and send the NTN air interface capability information to the NTN-CN. For details, refer to the descriptions of step S417 and step S419 shown in FIG. 4A and FIG. 4B. Details are not described herein again.

In this way, the UE 100 can access the NTN-CN in a roaming manner, and does not need to perform an NTN air interface capability synchronization procedure in the NTN, thereby reducing an air interface resource, device power consumption, and time consumed for transmitting the NTN air interface capability information.

Optionally, when sending the registration accept message that includes the EMPLN list of the NTN PLMN to the UE 100 via the NTN-RAN, the TN-CN may send the non-terrestrial network air interface capability request to the UE 100 via the NTN-RAN. In this way, the UE 100 does not need to send a registration request message whose registration type is mobility registration to trigger the TN-CN to send the non-terrestrial network air interface capability request, thereby reducing signaling overheads.

In a possible implementation, the UE 100 accesses a registration server in an internet via a WLAN. Signaling used by the UE 100 to register with an NTN-CN and NTN air interface capability information of the UE 100 may be transmitted between the UE 100 and the NTN-CN via the registration server, to implement registration of the UE 100 with the NTN-CN. After the UE 100 accesses the NTN-CN, the NTN-CN may not need to obtain the NTN air interface capability information of the UE 100, and synchronize the NTN air interface capability information of the UE 100 to an NTN-RAN. For details, refer to the embodiment shown in FIG. 3 or FIG. 5A and FIG. 5B. Details are not described herein again. In this way, because the NTN-CN obtains the NTN air interface capability information of the UE 100 via the WLAN, the NTN-CN does not need to obtain the NTN air interface capability information of the UE 100 via the NTN-RAN.

In a possible implementation, the UE 100 includes a SIM 6. The UE 100 may use a communication service of a TN 1 via the SIM 6, and may use a roaming service of a TN 2. When registering with the TN 1 network, the UE 100 may send air interface capability information of the SIM 6 in the TN 2 to a CN of the TN 1. The CN of the TN 1 may send an EPLMN list of the TN 2 to the UE 100. The UE 100 may search for the TN 2 based on the EPLMN list, and send a registration request message to a CN of the TN 2. After receiving the registration request message of the UE 100, the CN of the TN 2 may obtain registration context and the air interface capability information of the UE 100 in the TN 2 from the CN of the TN 1. In this way, the UE 100 can access the TN 2 through roaming, and does not need to perform an air interface capability information procedure of the TN 2 in the TN 2, thereby reducing time for the CN of the TN 2 to obtain the air interface capability information of the UE 100.

The following describes an electronic device provided in an embodiment of this application.

The UE 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specially limited in embodiments of this application.

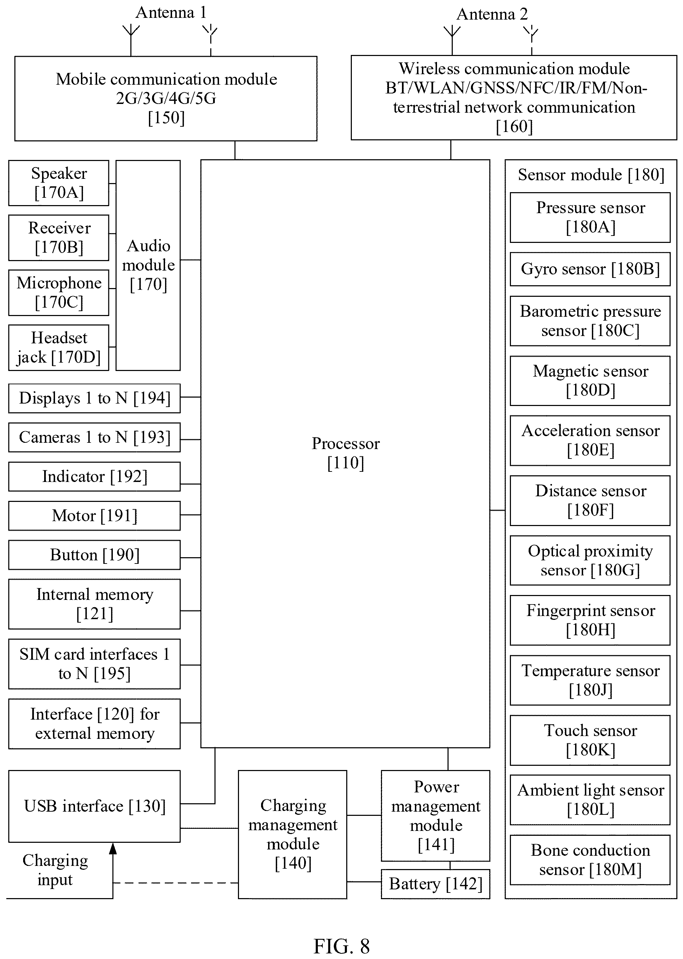

FIG. 8 is a diagram of a structure of the UE 100.

The UE 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the UE 100. In some other embodiments of this application, the UE 100 may include more or fewer components than those shown in the figure, or a combination of a part of the components, or splits from a part of the components, or an arrangement of different components. The components shown in the figure may be implemented by hardware, software, or a combination of the software and the hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a neural center and a command center of the UE 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

It may be understood that an interface connection relationship between the modules shown in this embodiment of the present invention is merely an example for description, and does not constitute a limitation on the structure of the UE 100. In some other embodiments of this application, the UE 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger via the USB interface 130. In some embodiments of wireless charging, the charging management module 140 may receive a wireless charging input via a wireless charging coil of the UE 100. When charging the battery 142, the charging management module 140 may further supply power to the electronic device via the power management module 141.

The power management module 141 is configured to connect to the battery 142, the charging management module 140, and the processor 110. The power management module 141 receives an input from the battery 142 and/or an input from the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the UE 100 may be implemented via the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the UE 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a solution that includes wireless communication such as 2G, 3G, 4G, and 5G and that is applied to the UE 100. The mobile communication module 150 may include at least one filter, a switch, a power amplifier, a low noise amplifier (low noise amplifier, LNA), and the like. The mobile communication module 150 may receive an electromagnetic wave via the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation via the antenna 1. In some embodiments, at least a part of functional modules of the mobile communication module 150 may be disposed in the processor 110. In some embodiments, at least a part of the functional modules of the mobile communication module 150 may be disposed in a same device as at least a part of modules of the processor 110.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal via an audio device (which is not limited to the speaker 170A, the receiver 170B, and the like), or displays an image or a video via the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the UE 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near-field communication, NFC) technology, an infrared (infrared, IR) technology, and a non-terrestrial network communication module. The wireless communication module 160 may be one or more devices integrating at least one communication processing module. The wireless communication module 160 receives an electromagnetic wave via an antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert a processed signal into an electromagnetic wave for radiation via the antenna 2.

The non-terrestrial network communication module (NTN communication module) may be configured to process a signal sent by the UE 100 to an NTN. The non-terrestrial network communication module may be further configured to process a signal from the NTN. In this embodiment of this application, the non-terrestrial network communication module may send a message to an NTN-RAN. The non-terrestrial network communication module may further receive a message from the NTN-RAN.

In some embodiments, in the UE 100, the antenna 1 is coupled to the mobile communication module 150, and the antenna 2 is coupled to the wireless communication module 160. In this way, the UE 100 can communicate with a network and another device via a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The UE 100 implements a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the UE 100 may include one or N displays 194, where N is a positive integer greater than 1.

The UE 100 may implement a photographing function via the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise and brightness of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the UE 100 may include one or N cameras 193, where N is a positive integer greater than 1.

The digital signal processor is configured to process a digital signal, and may process another digital signal in addition to the digital image signal. For example, when the UE 100 selects a frequency, the digital signal processor is configured to perform Fourier transform and the like on frequency energy.

The video codec is configured to compress or decompress a digital video. The UE 100 may support one or more video codecs. In this way, the UE 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the UE 100 may be implemented via the NPU, for example, image recognition, facial recognition, speech recognition, and text understanding.

The interface 120 for external memory may be configured to connect to an external non-volatile memory, to extend a storage capability of the UE 100. The external non-volatile memory communicates with the processor 110 via the interface 120 for external memory, to implement a data storage function. For example, a file like music or a video is stored in the external nonvolatile memory.

The internal memory 121 may be configured to store computer-executable program code. The executable program code includes instructions. The processor 110 runs the instructions stored in the internal memory 121, to perform various function applications of the UE 100 and data processing. The internal memory 121 may include a program storage area and a data storage area. The program storage area may store an operating system, an application required by at least one function (for example, a sound playing function or an image playing function), and the like. The data storage area may store data (for example, audio data or a phone book) created during use of the UE 100, and the like. In addition, the internal memory 121 may include a high-speed random access memory, and may further include a non-volatile memory, for example, at least one magnetic disk storage device, a flash memory device, and a universal flash storage (universal flash storage, UFS).

The UE 100 may implement an audio function, for example, music playing or recording, via the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The speaker 170A, also referred to as a "loudspeaker", is configured to convert an electrical audio signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal.

The pressure sensor 180A is configured to sense a pressure signal, and may convert the pressure signal into an electrical signal. In some embodiments, the pressure sensor 180A may be disposed on the display 194. The gyro sensor 180B may be configured to determine a motion posture of the UE 100. The barometric pressure sensor 180C is configured to measure barometric pressure. The magnetic sensor 180D includes a Hall sensor, and opening or closing of a flip cover may be detected via the magnetic sensor 180D. The acceleration sensor 180E may detect magnitude of accelerations in various directions (generally on three axes) of the UE 100. The distance sensor 180F is configured to measure a distance. The optical proximity sensor 180G may also be used in a flip cover mode or a pocket mode to automatically perform screen unlocking or locking. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed on the display 194, and the touch sensor 180K and the display 194 form a touchscreen that is also referred to as a "touch screen". The touch sensor 180K is configured to detect a touch operation performed on or near the touch sensor. The touch sensor may transfer the detected touch operation to the application processor, to determine a type of the touch event. A visual output related to the touch operation may be provided via the display 194. In some other embodiments, the touch sensor 180K may be alternatively disposed on a surface of the UE 100 and is at a location different from that of the display 194. The bone conduction sensor 180M may obtain a vibration signal. The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card, for example, a SIM 1, a SIM 2, or a SIM 3. The SIM card may be inserted into the SIM card interface 195 or removed from the SIM card interface 195, to implement contact with or separation from the UE 100. The UE 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external memory card. The UE 100 interacts with a network via the SIM card, to implement functions such as a call and data communication. In some embodiments, the UE 100 uses an eSIM, namely, an embedded SIM card. The eSIM card may be embedded in the UE 100, and cannot be separated from the UE 100.

The foregoing embodiments are intended merely to describe the technical solutions in this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in embodiments of this application.

## Claims

1. A capability synchronization method, applied to a communication system, wherein the communication system comprises a user equipment UE, a non-terrestrial network core network NTN-CN device, a non-terrestrial network radio access network NTN-RAN device, and a terrestrial network device; and the method comprises:
receiving, by the UE, a first non-terrestrial network air interface capability request sent by the terrestrial network device, and sending a first non-terrestrial network air interface capability message to the terrestrial network device, wherein the first non-terrestrial network air interface capability message comprises NTN air interface capability information of the UE;
sending, by the terrestrial network device, a second non-terrestrial network air interface capability message to the NTN-CN device, wherein the second non-terrestrial network air interface capability message comprises the NTN air interface capability information of the UE;
finding, by the UE, an NTN, and sending a first mobility registration request message to the NTN-CN device via the NTN-RAN device, wherein the first mobility registration request message is used by the UE to register with the NTN-CN device; and
sending, by the NTN-CN device, the NTN air interface capability information of the UE to the NTN-RAN device after receiving the first mobility registration request message.

2. The method according to claim 1, wherein before receiving, by the UE, the first non-terrestrial network air interface capability request, the method further comprises:
after the UE registers with the NTN-CN device via the terrestrial network device, sending, by the NTN-CN device, a second non-terrestrial network air interface capability request to the terrestrial network device, wherein the second non-terrestrial network air interface capability request is used by the NTN-CN device to obtain the NTN air interface capability information of the UE; and
sending, by the terrestrial network device, the first non-terrestrial network air interface capability request to the UE after receiving the second non-terrestrial network air interface capability request.

3. The method according to claim 2, wherein the terrestrial network device comprises a terrestrial network radio access network TN-RAN device and a terrestrial network core network TN-CN device; and sending, by the terrestrial network device, the first non-terrestrial network air interface capability request to the UE after receiving the second non-terrestrial network air interface capability request specifically comprises:
receiving, by the TN-CN device, the second non-terrestrial network air interface capability request, and sending the first non-terrestrial network air interface capability request to the TN-RAN device; and
receiving, by the TN-RAN device, the first non-terrestrial network air interface capability request, and sending the first non-terrestrial network air interface capability request to the UE.

4. The method according to claim 2, wherein the terrestrial network device comprises a TN-CN device and a TN-RAN device; and sending, by the terrestrial network device, the first non-terrestrial network air interface capability request to the UE after receiving the second non-terrestrial network air interface capability request specifically comprises:
receiving, by the TN-CN device, the second non-terrestrial network air interface capability request, and sending the second non-terrestrial network air interface capability request to the TN-RAN device; and
receiving, by the TN-RAN device, the second non-terrestrial network air interface capability request, and sending the first non-terrestrial network air interface capability request to the UE.

5. The method according to claim 1, wherein the terrestrial network device comprises a TN-RAN device; and before receiving, by the UE, the first non-terrestrial network air interface capability request, the method further comprises:
after the UE registers with the NTN-CN device via the TN-RAN device, sending, by the NTN-CN device, a second non-terrestrial network air interface capability request to the TN-RAN device, wherein the second non-terrestrial network air interface capability request is used by the NTN-CN device to obtain the NTN air interface capability information of the UE; and
sending, by the TN-RAN device, the first non-terrestrial network air interface capability request to the UE after receiving the second non-terrestrial network air interface capability request.

6. The method according to any one of claims 1 to 5, wherein sending, by the terrestrial network device, the second non-terrestrial network air interface capability message to the NTN-CN device specifically comprises:
sending, by the terrestrial network device, the second non-terrestrial network air interface capability message to the NTN-CN device in response to the first non-terrestrial network air interface capability message.

7. The method according to claim 6, wherein the first non-terrestrial network air interface capability message is a user equipment capability information UE Capability Information message, and the second non-terrestrial network air interface capability message is a user equipment capability information indication UE Capability Infor Indication message.

8. The method according to claim 1, wherein the terrestrial network device comprises a TN-CN device; and before receiving, by the UE, the first non-terrestrial network air interface capability request, the method further comprises:
sending, by the terrestrial network device, the first non-terrestrial network air interface capability request to the UE after the UE registers with the TN-CN device via the terrestrial network device.

9. The method according to claim 8, wherein sending, by the terrestrial network device, the first non-terrestrial network air interface capability request to the UE specifically comprises:
sending, by the UE, a first capability change message to the TN-CN device after the UE registers with the TN-CN device via the terrestrial network device, wherein the first capability change message indicates an NTN air interface capability change of the UE;
sending, by the TN-CN device, a second non-terrestrial network air interface capability request to a TN-RAN device in response to the first capability change message; and
sending, by the TN-RAN device, the first non-terrestrial network air interface capability request to the UE in response to the second non-terrestrial network air interface capability request; or
sending, by the TN-CN device, the first non-terrestrial network air interface capability request to the UE via the TN-RAN device in response to the first capability change message.

10. The method according to claim 9, wherein the first capability change message is a second mobility registration request message, and the second mobility registration request message comprises a parameter indicating that an NTN air interface capability of the UE changes; or the first capability change message is a user equipment capability release command message.

11. The method according to any one of claims 8 to 10, wherein the method further comprises:
sending, by the NTN-CN device, a first capability synchronization message to the TN-CN device after receiving the first mobility registration request message, wherein the first capability synchronization message is used to obtain the NTN air interface capability information of the UE from the TN-CN device; and
sending, by the terrestrial network device, the second non-terrestrial network air interface capability message to the NTN-CN device specifically comprises:
sending, by the TN-CN device, the second non-terrestrial network air interface capability message to the NTN-CN device in response to the first capability synchronization message.

12. The method according to any one of claims 1 to 11, wherein sending the NTN air interface capability information of the UE to the NTN-RAN device specifically comprises:
sending, by the NTN-CN device, an initial context setup request message to the NTN-RAN device, wherein the initial context setup request message comprises the NTN air interface capability information of the UE.

13. The method according to any one of claims 1 to 12, wherein the first non-terrestrial network air interface capability request is a user equipment capability enquiry UE capability enquiry (NTN) message, and the second non-terrestrial network air interface capability request is a non-terrestrial network air interface capability information request NTN capability info request.

14. The method according to any one of claims 1 to 13, wherein the NTN air interface capability information comprises a carrier supported by the UE, an antenna polarization direction of the UE, maximum transmit power of the UE, and a duplex mode of the UE.

15. A capability synchronization method, applied to a user equipment UE, wherein the method comprises:
receiving, by the UE, a first non-terrestrial network air interface capability request sent by a terrestrial network device, wherein the first non-terrestrial network air interface capability request is used to obtain NTN air interface capability information of the UE;
sending, by the UE, a first non-terrestrial network air interface capability message to the terrestrial network device after receiving the first non-terrestrial network air interface capability request, wherein the first non-terrestrial network air interface capability message comprises the NTN air interface capability information of the UE; and
sending, by the UE, a mobility registration request message to a non-terrestrial network core network NTN-CN device after finding a non-terrestrial network NTN, wherein the mobility registration request message is used to trigger the NTN-CN device to send the NTN air interface capability information of the UE to an NTN-RAN device.

16. The method according to claim 15, wherein before receiving, by the UE, the first non-terrestrial network air interface capability request sent by the terrestrial network device, the method further comprises:
registering, by the UE, with the NTN-CN device via the terrestrial network device.

17. The method according to claim 15, wherein before receiving, by the UE, the first non-terrestrial network air interface capability request sent by the terrestrial network device, the method further comprises:
registering, by the UE, with a TN-CN device.

18. The method according to any one of claims 15 to 17, wherein before receiving, by the UE, the first non-terrestrial network air interface capability request sent by the terrestrial network device, the method further comprises:
sending, by the UE, a first capability change message to the TN-CN device, wherein the first capability change message indicates that an NTN air interface capability of the UE changes.

19. A capability synchronization method, applied to a non-terrestrial network core network NTN-CN device, wherein the method comprises:
sending, by the NTN-CN device, a first non-terrestrial network air interface capability request to a user equipment UE via a terrestrial network device, wherein the first non-terrestrial network air interface capability request is used to obtain NTN air interface capability information of the UE;
receiving, by the NTN-CN device via the terrestrial network device, a first non-terrestrial network air interface capability message sent by the UE, wherein the first non-terrestrial network air interface capability message comprises the NTN air interface capability information of the UE; and
sending, by the NTN-CN device, the NTN air interface capability information of the UE to a non-terrestrial network radio access network NTN-RAN device after receiving a first mobility registration request message sent by the UE, wherein the first mobility registration request message is used by the UE to register with the NTN-CN device.

20. The method according to claim 19, wherein before sending, by the NTN-CN device, the first non-terrestrial network air interface capability request to the UE via the terrestrial network device, the method further comprises:
receiving, by the NTN-CN device, an initial registration request of the UE via the terrestrial network device.

21. The method according to claim 19 or 20, wherein sending, by the NTN-CN device, the first non-terrestrial network air interface capability request to the UE via the terrestrial network device specifically comprises:
receiving, by the NTN-CN device via the terrestrial network device, a first capability change message sent by the UE, wherein the first capability change message indicates that an NTN air interface capability of the UE changes; and
sending, by the NTN-CN device, the first non-terrestrial network air interface capability request to the UE via the terrestrial network device in response to the first capability change message.

22. A capability synchronization method, applied to a non-terrestrial network core network NTN-CN device, wherein the method comprises:
sending, by the NTN-CN device, a first capability synchronization message to a terrestrial network core network TN-CN device after receiving a first mobility registration request message sent by a user equipment UE, wherein the first capability synchronization message is used to obtain NTN air interface capability information of the UE from the TN-CN device;
receiving, by the NTN-CN device, a first non-terrestrial network air interface capability message sent by the TN-CN device, wherein the first non-terrestrial network air interface capability message comprises the NTN air interface capability information of the UE; and
sending, by the NTN-CN device, the NTN air interface capability information of the UE to a non-terrestrial network radio access network NTN-RAN device.

23. A capability synchronization method, applied to a terrestrial network core network TN-CN device, wherein the method comprises:
sending, by the TN-CN device, a first non-terrestrial network air interface capability request to a user equipment UE, wherein the first non-terrestrial network air interface capability request is used to obtain NTN air interface capability information of the UE;
receiving, by the TN-CN device, a first non-terrestrial network air interface capability message sent by the UE, wherein the first non-terrestrial network air interface capability message comprises the NTN air interface capability information of the UE; and
sending, by the TN-CN device, a second non-terrestrial network air interface capability message to a non-terrestrial network core network NTN-CN device, wherein the second non-terrestrial network air interface capability message comprises the NTN air interface capability information of the UE.

24. The method according to claim 23, wherein sending, by the TN-CN device, the first non-terrestrial network air interface capability request to the user equipment UE specifically comprises:
receiving, by the TN-CN device, a second non-terrestrial network air interface capability request sent by the NTN-CN device; and
sending, by the TN-CN device, the first non-terrestrial network air interface capability request to the UE in response to the second non-terrestrial network air interface capability request.

25. The method according to claim 23, wherein sending, by the TN-CN device, the first non-terrestrial network air interface capability request to the user equipment UE specifically comprises:
sending, by the TN-CN device, the first non-terrestrial network air interface capability request to the UE after accepting an initial registration request of the UE.

26. The method according to claim 25, wherein sending, by the TN-CN device, the second non-terrestrial network air interface capability message to the non-terrestrial network core network NTN-CN device specifically comprises:
receiving, by the TN-CN device, a first capability synchronization message sent by the NTN-CN device; and
sending, by the TN-CN device, the second non-terrestrial network air interface capability message to the NTN-CN device in response to the first capability synchronization message.

27. The method according to any one of claims 23 to 26, wherein before sending, by the TN-CN device, the first non-terrestrial network air interface capability request to the user equipment UE, the method further comprises:
receiving, by the TN-CN device, a first capability change message sent by the UE, wherein the first capability change message indicates that an NTN air interface capability of the UE changes.

28. A capability synchronization method, applied to a terrestrial network radio access network TN-RAN device, wherein the method comprises:
sending, by the TN-RAN device, a first non-terrestrial network air interface capability request to a user equipment UE, wherein the first non-terrestrial network air interface capability request is used to obtain NTN air interface capability information of the UE;
receiving, by the TN-RAN device, a first non-terrestrial network air interface capability message sent by the UE, wherein the first non-terrestrial network air interface capability message comprises the NTN air interface capability information of the UE; and
sending, by the TN-RAN device, a second non-terrestrial network air interface capability message to a non-terrestrial network core network NTN-CN device or a terrestrial network core network TN-CN device, wherein the second non-terrestrial network air interface capability message comprises the NTN air interface capability information of the UE.

29. An electronic device, comprising one or more processors and one or more memories, wherein the one or more memories are coupled to the one or more processors, the one or more memories are configured to store a computer-executable program, and when the one or more processors execute the computer-executable program, the electronic device is enabled to perform the method according to any one of claims 15 to 18, 19 to 21, 22, 23 to 27, or 28.

30. A computer-readable storage medium, storing a computer program, wherein when the computer program is run on a processor of an electronic device, the electronic device is enabled to perform the method according to any one of claims 15 to 18, 19 to 21, 22, 23 to 27, or 28.
